# EUROPEAN PATENT APPLICATION

(11) **EP 4 243 496 A2**
(43) Date of publication of application: **13.09.2023**
(21) Application number: 23188464.4
(22) Date of filing: 26.05.2021
(51) Int. Cl.: H04W 36/00

(54) **RECONNECTION CELL ID IN RLF REPORT**

(30) Priority: 26.05.2020 US 202063030022 P
(62) Divisional of application: 21729666.4
(71) Applicant: Telefonaktiebolaget LM Ericsson (publ), 164 83 Stockholm (SE)
(72) Inventor: PARICHEHREHTEROUJEN, Ali, SE-583 34 LINKÖPING (SE); RAMACHANDRA, Pradeepa, SE-589 29 LINKÖPING (SE)
(74) Representative: Ericsson

(57) **Abstract**

According to some embodiments, a method performed by a wireless device includes: detecting (612) a radio link failure (RLF); performing (614) a reestablishment procedure; determining (616) whether the reestablishment procedure was successful; and storing (618) information about the success or failure of the establishment procedure in a RLF report. Upon the wireless device transitioning from an idle mode to a connected mode in a currently connected cell, the method further comprises determining (620) that a reconnect cell identifier is absent from the RLF report and conditionally including an identifier of the currently connected cell as the reconnect cell identifier and transmitting (622) the RLF report to a network node.

## Description

### TECHNICAL FIELD

Embodiments of the present disclosure are directed to wireless communications and, more particularly, to computer program products relating to radio link failure (RLF) reports.

### BACKGROUND

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features, and advantages of the enclosed embodiments will be apparent from the following description.

Long term evolution (LTE) and fifth generation (5G) new radio (NR) bot include radio link failure (RLF) reporting. In connected mode, the network typically configures a user equipment (UE) to perform and report radio resource management (RRM) measurements to assist network-controlled mobility decisions, i.e., handovers, which is network control.

For handovers, the network decides to hand over a UE from one cell to another. As a fallback, if handovers do not work properly, a failure detection and counter-action at the UE is referred to as an RLF procedure.

The RLF procedure is typically triggered when something unexpected happens in any of the mobility related procedures. The event may be detected based on interactions between radio resource control (RRC) and lower layer protocols such as layer 1 (L1), medium access control (MAC), radio link control (RLC), etc. L1 includes a radio link monitoring procedure.

The following describes what triggers RLF and the content of RLF reports, to support mobility robustness optimization (MRO). Among different issues that may trigger RLF in LTE and NR, two of them are of particular interest. The first is RLF due to radio link problem (expiry of timer T301), i.e., RLF due to problems indicated by physical layer. The second is RLF due to random access problem, i.e., RLF indicated by MAC layer.

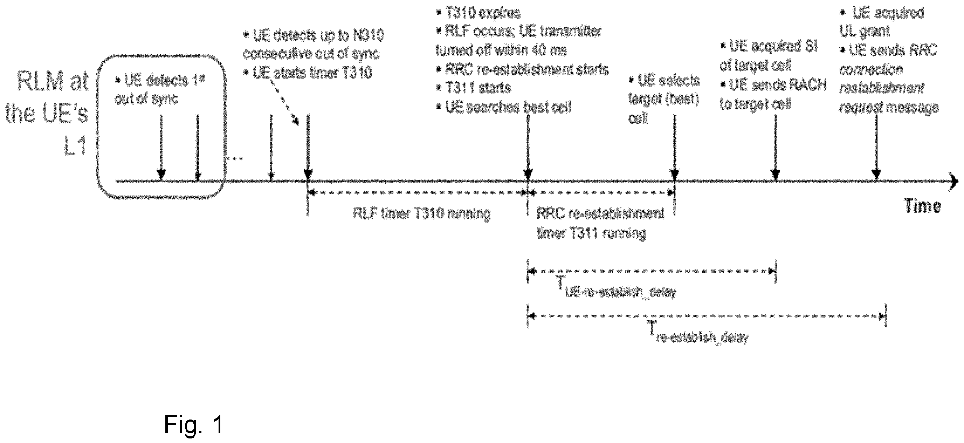

RLF may be triggered by radio link problems (L1) in LTE. In LTE, lower layers provide to upper layer Out-of-Sync (OOS) and In-Sync (IS), internally by the UE's physical layer, which in turn may apply RRC/layer 3 (i.e., higher layer) filtering for the evaluation of RLF. An example is illustrated in FIGURE 1.

FIGURE 1 is a timing diagram illustrating RLF procedures in LTE. The horizontal axis represents time. The various arrows represent events on the timeline.

The details UE actions related to RLF are captured in the RRC specifications (36_331) described below.

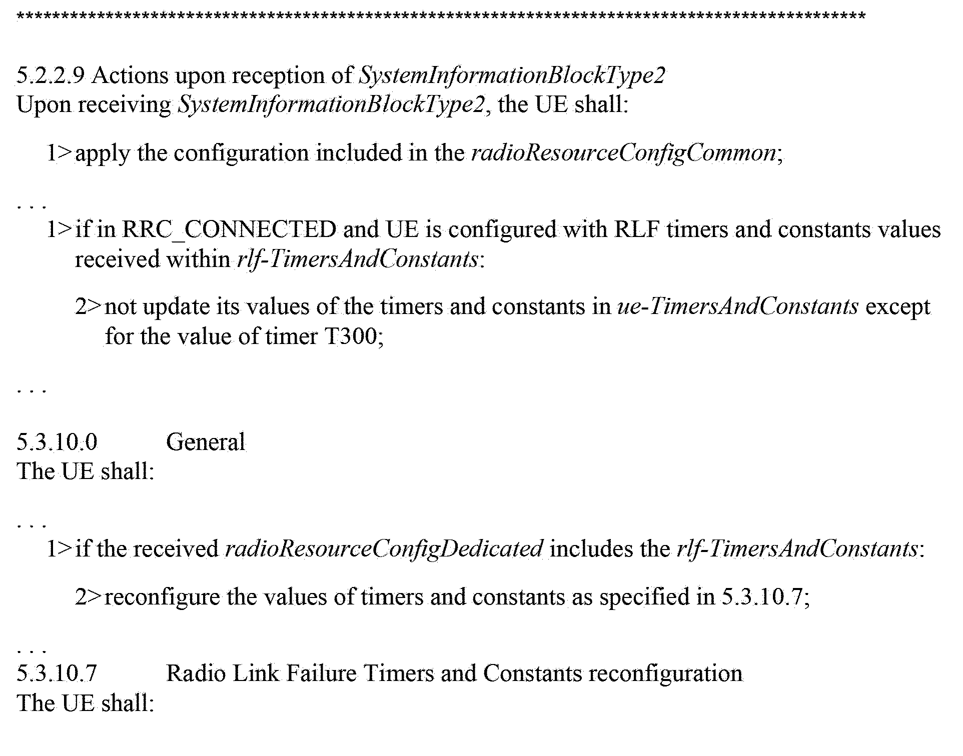

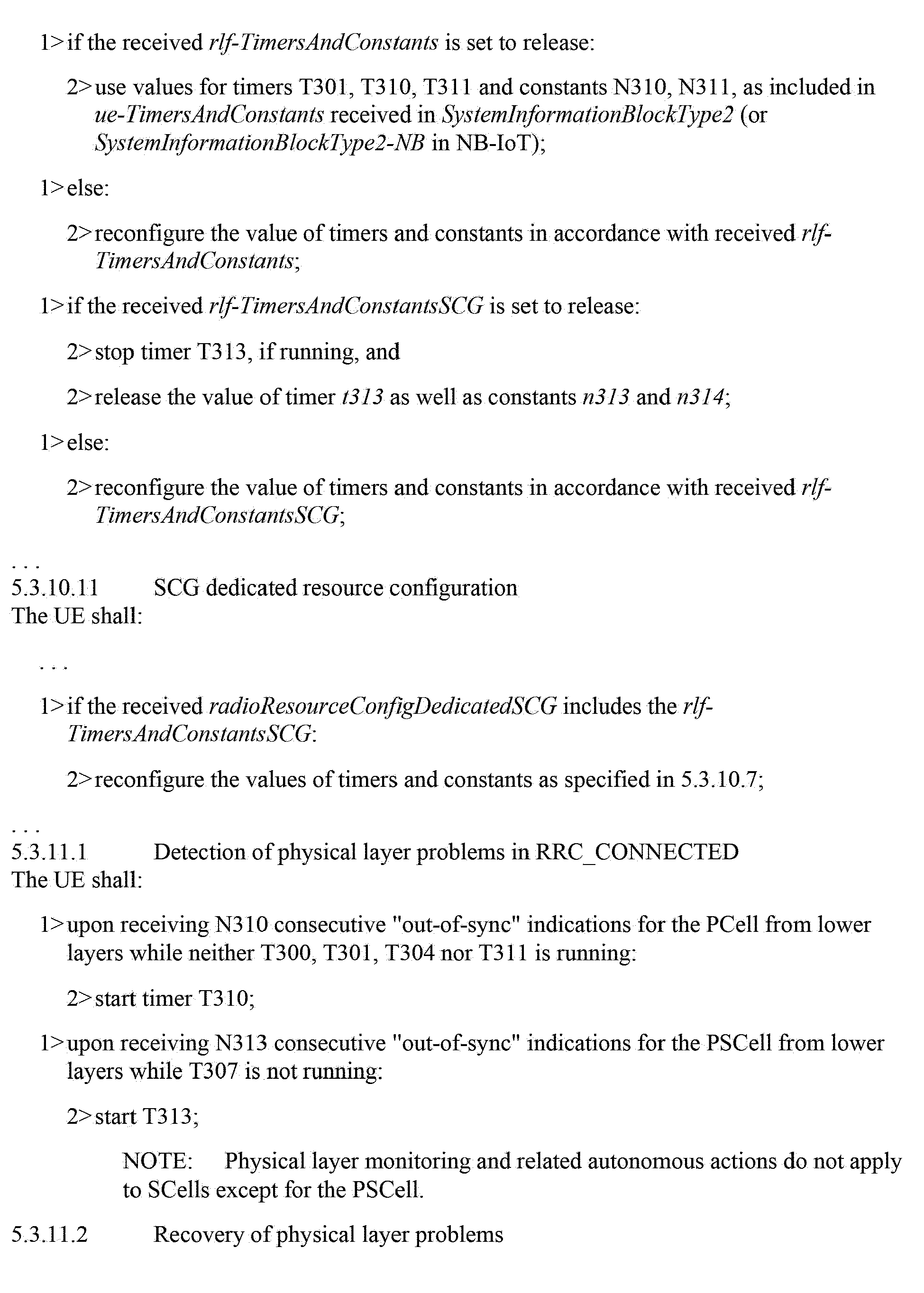

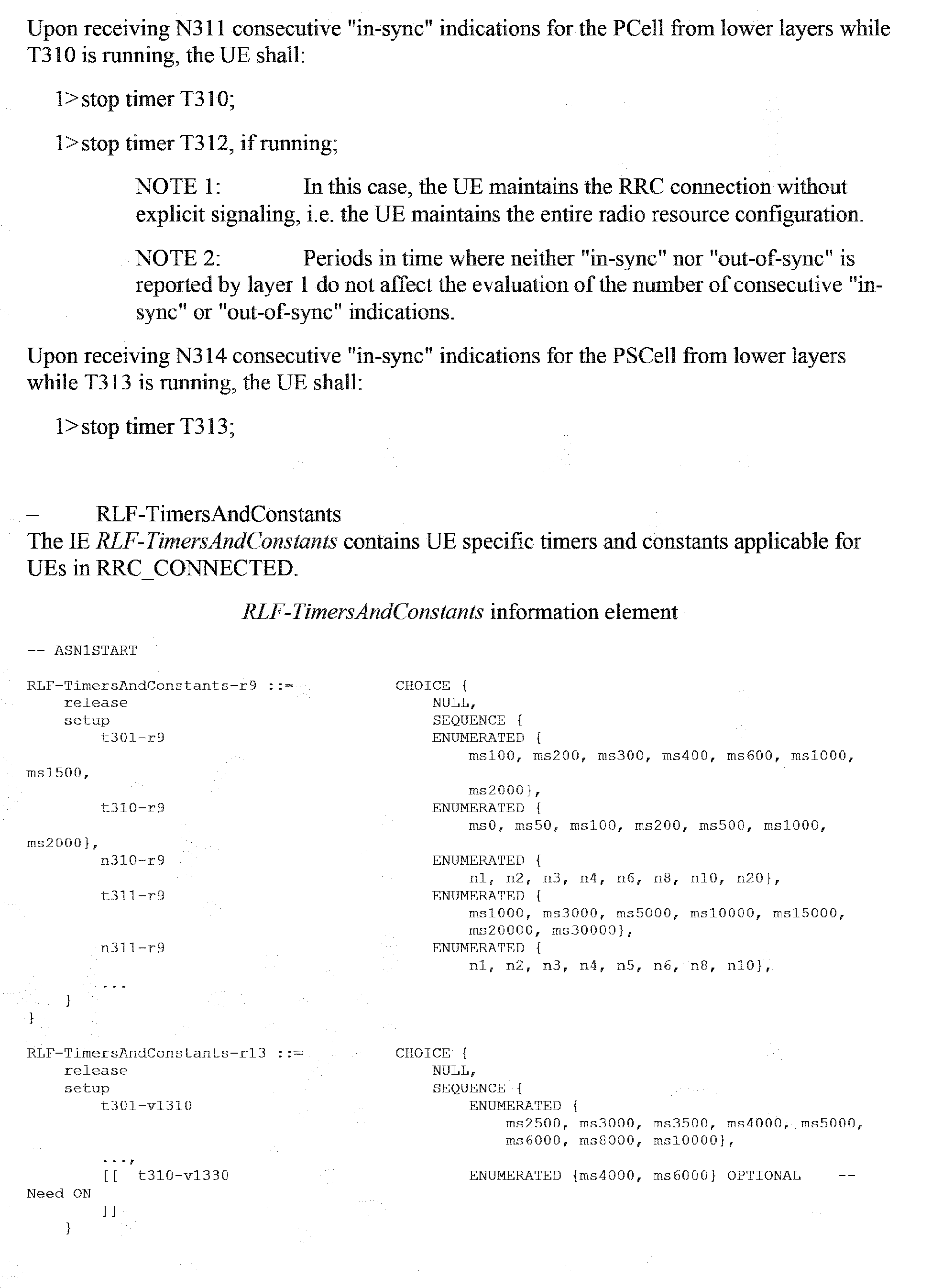

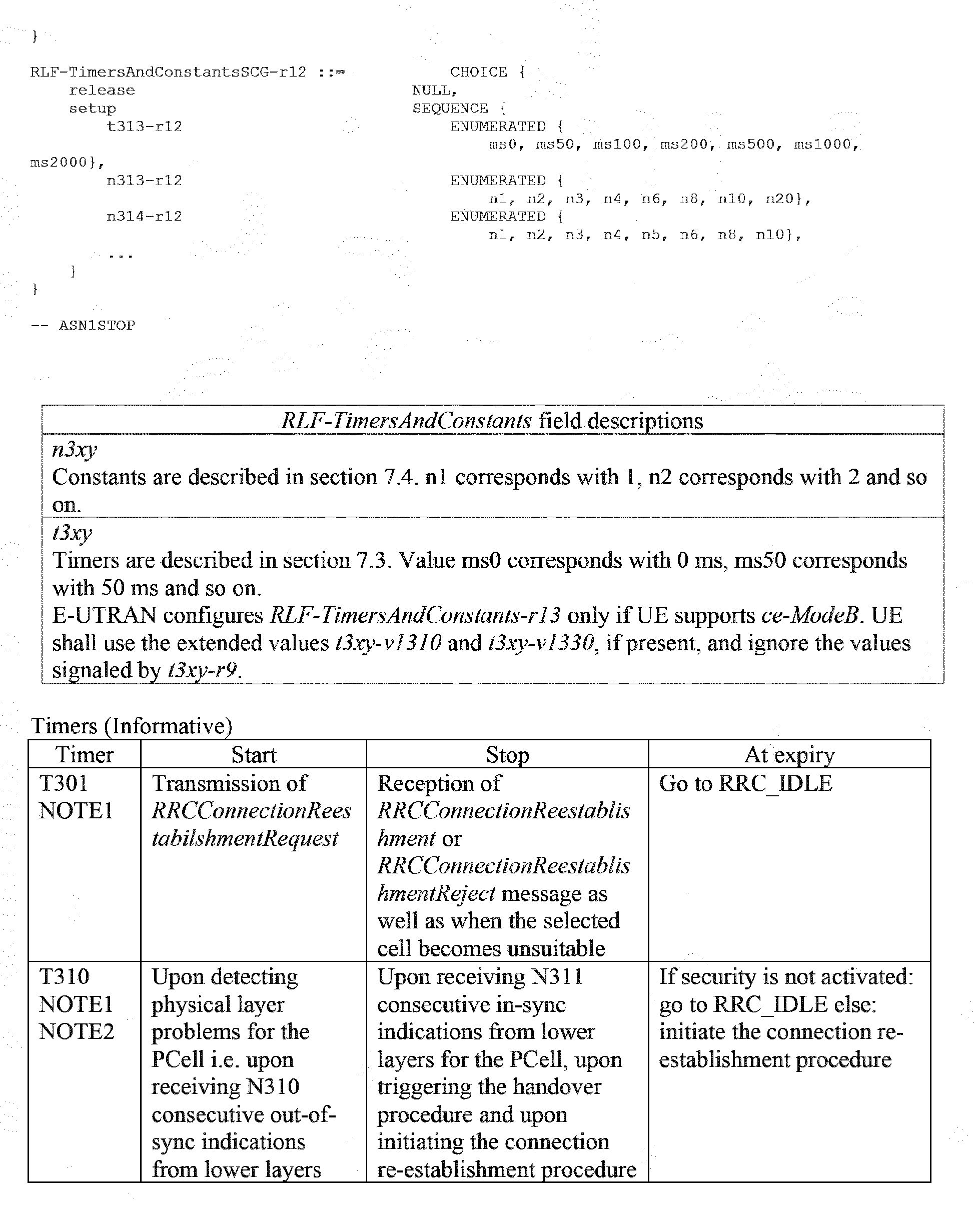

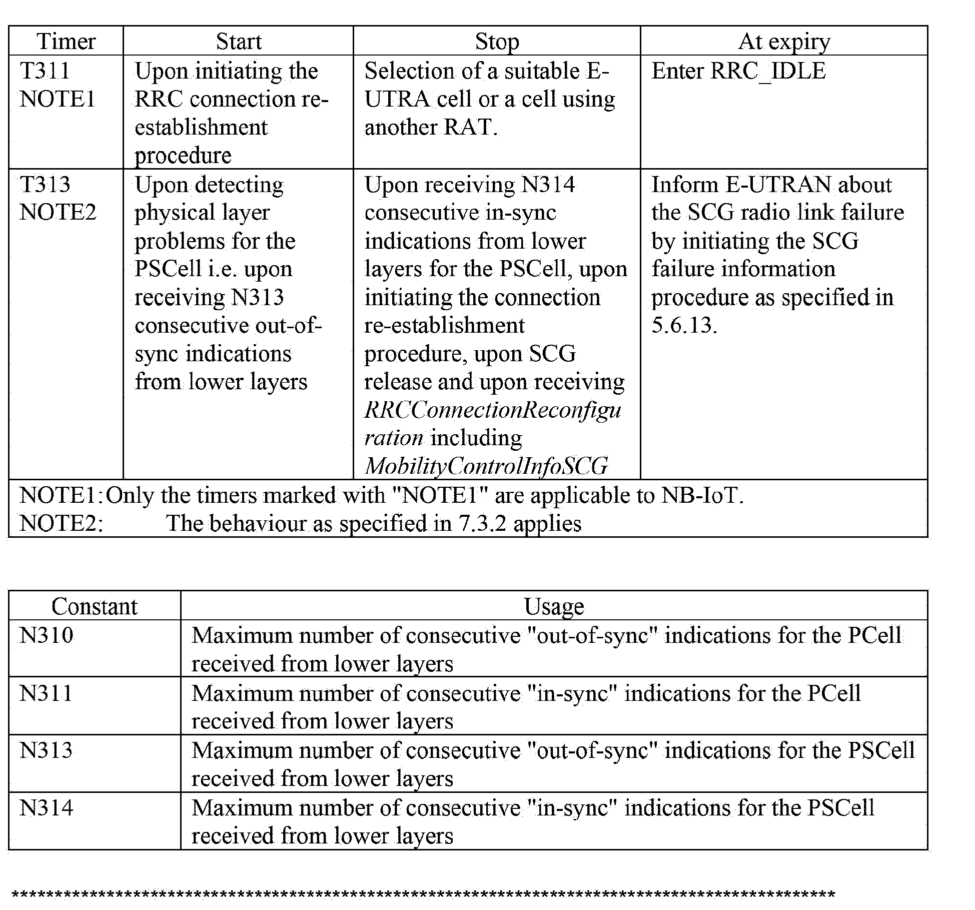

When discontinuous reception (DRX) is in use, to enable sufficient UE power saving the out-of-sync and in-sync evaluation periods are extended and depend upon the configured DRX cycle length. The UE starts in-sync evaluation whenever out-of-sync occurs. Therefore, the same period (TEvaluate_Qout_DRX) is used for the evaluation of out-of-sync and in-sync. However, upon starting the RLF timer (T310) until its expiry, the in-sync evaluation period is shortened to 100 ms, which is the same as without DRX. If the timer T310 is stopped due to N311 consecutive in-sync indications, the UE performs in-sync evaluation according to the DRX based period (TEvaluate_Qout_DRX).

The methodology used for radio link management (RLM) in LTE (i.e., measuring the cell-specific reference signal (CRS) to "estimate" the physical downlink control channel (PDCCH) quality) relies on the fact that the UE is connected to an LTE cell which is the single connectivity entity transmitting PDCCH and CRSs.

In summary, RLM in LTE has been specified so that the network does not need to configure any parameter, i.e., UE generates IS/OOS events internally from lower to higher layers to control the detection of radio link problems. On the other hand, RLF/SCG Failure procedures are controlled by RRC and configured by the network via counters N310, N311, N313, N314 (which work as filters to avoid too early RLF triggering) and timers T310, T311, T313 and T314.

The purpose of the RLM function in the UE is to monitor the downlink radio link quality of the serving cell in RRC_CONNECTED state and is based on the cell-specific reference signals, which are always associated to a given LTE cell and derived from the physical cell identifier (PCI). This in turn enables the UE when in RRC_CONNECTED state to determine whether it is in-sync or out-of-sync with respect to its serving cell.

The UE's estimate of the downlink radio link quality is compared with out-of-sync (OOS) and in-sync (IS) thresholds, Qout and Qin respectively, for the purpose of RLM. These thresholds are expressed in terms of the block error rate (BLER) of a hypothetical physical downlink control channel (PDCCH) transmission from the serving cell. Specifically, Qout corresponds to a 10% BLER while Qin corresponds to a 2% BLER. The same threshold levels are applicable with and without DRX.

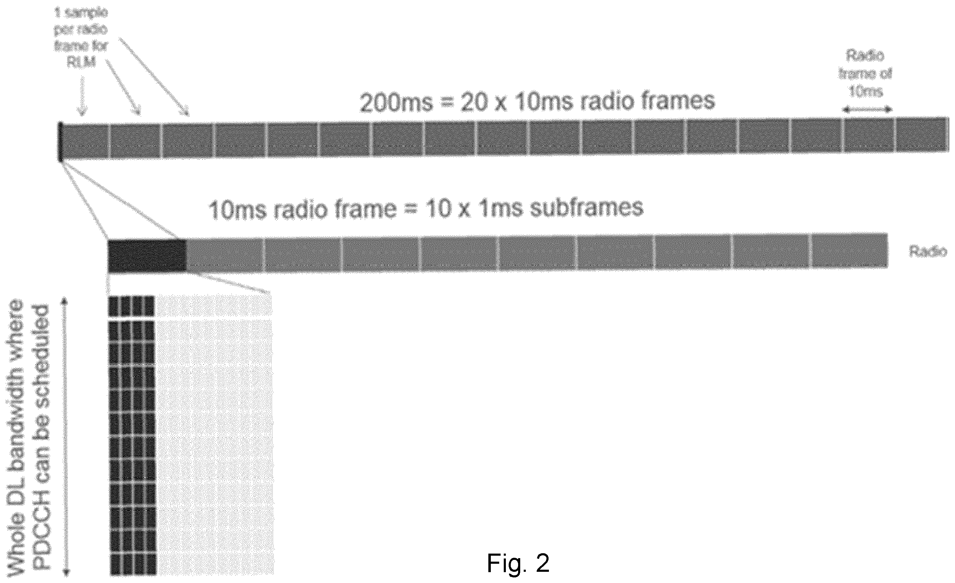

The mapping between the CRS based downlink quality and the hypothetical PDCCH BLER is up to the UE implementation. However, the performance is verified by conformance tests defined for various environments. Also, the downlink quality is calculated based on the reference signal receive power (RSRP) of CRS over the entire band because the UE does not necessarily know where PDCCH is going to be scheduled. An example is illustrated in FIGURE 2.

FIGURE 2 illustrates PDCCH may be scheduled anywhere over the whole downlink transmission bandwidth. FIGURE 2 illustrates the radio frame and subframe hierarchy and the location of PDCCH.

When no DRX is configured, OOS occurs when the downlink radio link quality estimated over the last 200 ms period becomes worse than the threshold Qout. Similarly, without DRX the IS occurs when the downlink radio link quality estimated over the last 100 ms period becomes better than the threshold Qin. Upon detection of out-of-sync, the UE initiates the evaluation of in-sync.

RLF may also be triggered by random access problems. Random access is a MAC layer procedure. Thus, it is the MAC that indicates to RRC a random access channel (RACH) failure, which happens, e.g., when the maximum number of preamble retransmissions is reached (i.e., after the UE has tried to perform power ramping a number of times and/or went through failed contention resolutions). Below is an example how a UE may reach a maximum number of preamble retransmissions.

In LTE, a UE performs random access for many different purposes, both in RRC_CONNECTED and RRC_IDLE. LTE uses the RACH for initial network access, but in LTE the RACH cannot carry user data, which is exclusively sent on the physical uplink shared channel (PUSCH).

Instead, the LTE RACH is used to achieve uplink time synchronization for a UE which either has not yet acquired, or has lost, its uplink synchronization. After uplink synchronization is achieved for a UE, the eNodeB can schedule orthogonal uplink transmission resources for it. Relevant scenarios in which the RACH is used include the following.
(1) A UE in RRC_CONNECTED state, but not uplink-synchronized, needing to send new uplink data or control information (e.g. an event-triggered measurement report);
(2) A UE in RRC CONNECTED state, but not uplink-synchronized, needing to receive new downlink data, and therefore to transmit corresponding acknowledgement/negative acknowledgement (ACK/NACK) in the uplink;
(3) A UE in RRC_CONNECTED state, handing over from its current serving cell to a target cell;
(4) For positioning purposes in RRC_CONNECTED state, when timing advance is needed for UE positioning;
(5) A transition from RRC_IDLE state to RRC CONNECTED, for example for initial access or tracking area updates;
(6) Recovering from radio link failure; and
(7) One additional exceptional case is that an uplink-synchronized UE is allowed to use the RACH to send a scheduling request (SR) if it does not have any other uplink resource.

Random access in LTE may either be configured as contention-based random access (CBRA), with inherent risk of collision, or contention-free random access (CFRA), where resources are reserved by the network to a given UE at a given time.

One problem is preamble retransmission due to collision detection of random access response RAR not received. Random access is captured in the MAC specifications (TS 36.321).

In CBRA the UE randomly selects a preamble and transmits with a configurable initial power. Then, it waits for a random-access response in a configurable time window. The RAR contains a temporary cell radio network temporary identifier (TC-RNTI) and an uplink grant for MSG.3. If the UE receives a RAR within the time window, it transmits MSG.3. If the UE has a cell radio network temporary identifier (C-RNTI) allocated by the cell, UE addresses MSG.3 with that, otherwise it uses the TC-RNTI received in the RAR.

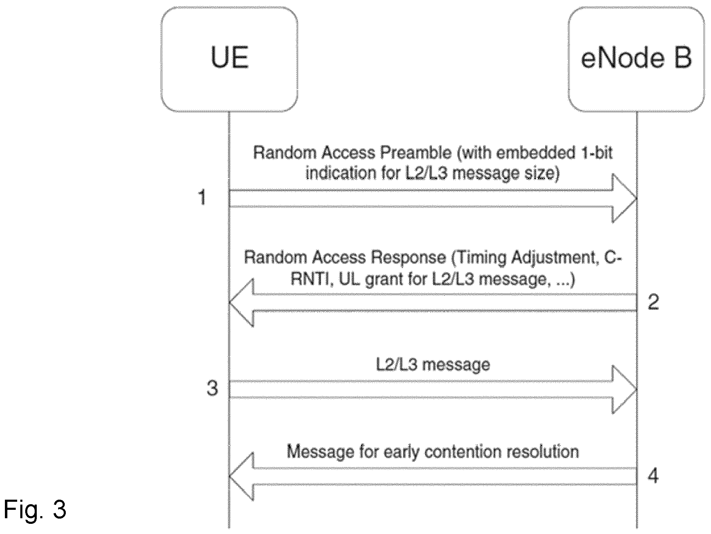

Because a preamble collision have occurred, different UEs might have received the same RAR, thus, the network sends a MSG.4 to possibly solve contention. If the UE has used the allocated C-RNTI in MSG.4, that is echoed back in MSG.4 to indicate that collision is resolved. Otherwise, the network addresses the UE with the TC-RNTI and includes in the MAC payload the UE identity used in MSG.3. If the UE identity matches the one the UE has, the UE considers the contention resolved. The CBRA procedure is described with respect to FIGURE 3.

FIGURE 3 is a flow diagram illustrating an example CBRA procedure. If collision is detected, the UE performs preamble re-transmission and initiates random access again.

Collision is considered to be detected in the following cases: (a) after transmitting a MSG.3 using a C-RNTI assigned by target cell (e.g., in handover or when UE is in RRC CONNECTED), the UE detects a MSG.4 not addressing its C-RNTI and contention resolution timer expires; and (b) after transmitting a MSG.3 using a TC-RNTI assigned to it in the RAR, the UE detects a MSG.4 addressing the same TC-RNTI but the UE Identity in the MSG.4 payload does not match the UE's identity transmitted on MSG.3.

A collision is not considered in MAC as a failure case. Thus, upper layers are not aware that a collision has occurred.

Preamble retransmission is also triggered when the UE sends a preamble and does not receive a RAR within the RAR time window. In this case, the UE performs preamble power ramping and transmits the preamble again. In LTE, the network may also configure contention-free random access, such as in handover and resumption of downlink traffic for a UE, by allocating a dedicated signature to the UE on a per-need basis.

In all these cases, when the RAR time window expires (for CFRA or CBRA) or when collision is detected, the UE performs preamble retransmission.

A configured parameter controls how many times the UE shall do that, as shown below as part of the RACH-ConfigCommon. The information element (IE) *RACH-ConfigCommon* is used to specify the generic random access parameters.
*RACH ConfigCommon* information element

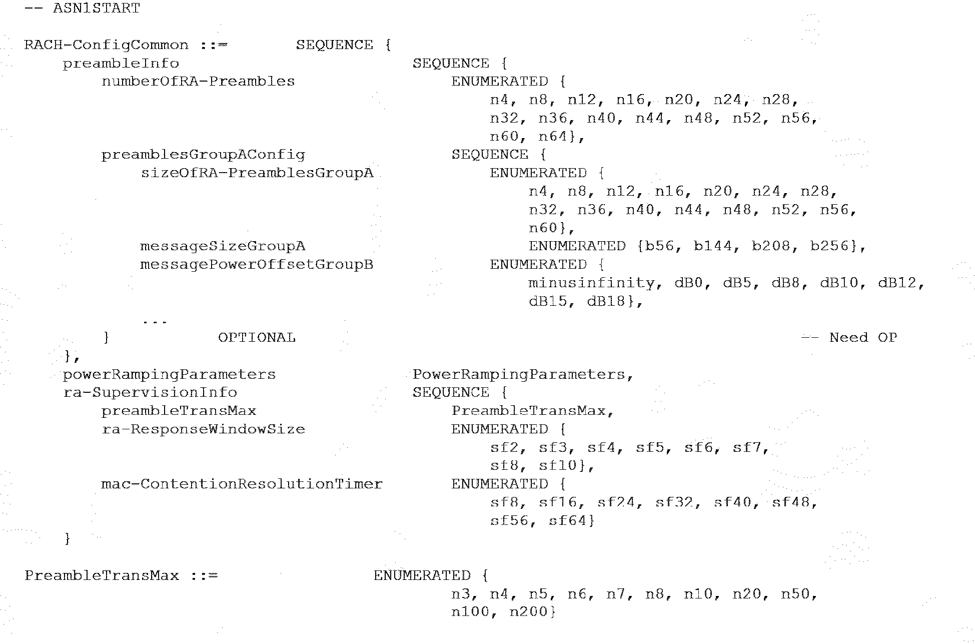

NR includes mobility robustness optimization (MRO), which includes a RLF report. Seamless handovers are a key feature of Third Generation Partnership Project (3GPP) technologies. Successful handovers ensure that the UE moves around in the coverage area of different cells without causing significant interruptions in the data transmission. However, there will be scenarios when the network fails to handover the UE to the correct neighbor cell in time and in such scenarios the UE will declare the RLF or handover failure (HOF).

Upon HOF and RLF, the UE may take autonomous actions, i.e., trying to select a cell and initiate reestablishment procedure to make sure the UE is trying to get back as soon as it can, so that it can be reachable again. The RLF will cause a poor user experience as the RLF is declared by the UE only when it realizes that there is no reliable communication channel (radio link) available between itself and the network. Also, reestablishing the connection requires signaling with the newly selected cell (random access procedure, RRC Reestablishment Request, RRC Reestablishment RRC Reestablishment Complete, RRC Reconfiguration and RRC Reconfiguration Complete) and adds some latency until the UE can exchange data with the network again.

According to the specifications (TS 36.331), the possible causes for the radio link failure could be one of the following: (a) expiry of the radio link monitoring related timer T310; (b) upon reaching the maximum number of RLC retransmissions; (c) upon receiving random access problem indication from the MAC entity; and (d) wrong beam failure recovery configuration and failure at beam failure recovery procedure.

Because RLF leads to reestablishment which degrades performance and user experience, it is in the interest of the network to understand the reasons for RLF and try to optimize mobility related parameters (e.g., trigger conditions of measurement reports) to avoid later RLFs. Before the standardization of MRO related report handling in the network, only the UE was aware of some information associated to the radio quality at the time of RLF, the actual reason for declaring RLF, etc. For the network to identify the reason for the RLF, the network needs more information, both from the UE and also from neighboring base stations.

As part of the MRO solution in NR, the RLF reporting procedure was introduced in the RRC specification in Rel-16. That has impacted the RRC specifications (TS 38.331) in the sense that it was standardized that the UE would log relevant information at the moment of an RLF and later report to a target cell the UE succeeds to connect (e.g., after reestablishment). That has also impacted the inter-gNodeB interface, i.e., XnAP specifications (TS 38.423), as an gNodeB receiving an RLF report could forward to the gNodeB where the failure has been originated.

For the RLF report generated by the UE, its contents have been enhanced with more details in subsequent releases. The measurements included in the measurement report based on the latest NR RRC specification are:
1) Measurement quantities - cell level and beam level measurements - of the last serving cell (PCell).
2) Measurement quantities - cell level and beam level measurements - of the neighbor cells in different frequencies of different RATs (NR, EUTRA, UTRA, GERAN, CDMA2000).
3) Measurement quantity (RSSI) associated to WLAN Aps.
4) Measurement quantity (RSSI) associated to Bluetooth beacons.
5) Location information, if available (including location coordinates and velocity)
6) Globally unique identity of the last serving cell, if available, otherwise the PCI and the carrier frequency of the last serving cell.
7) Tracking area code of the PCell.
8) Time elapsed since the last reception of the *'Handover command'* message.
9) C-RNTI used in the previous serving cell.
10) RACH related information
11) Re-establishment cell ID

The detection and logging of the RLF related parameters is captured in section 5.3.10 of NR RRC specification as described below.

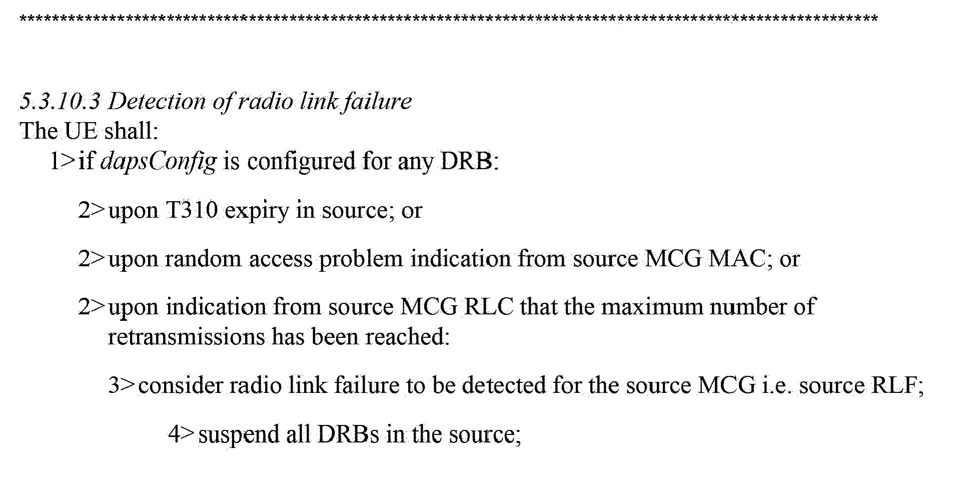

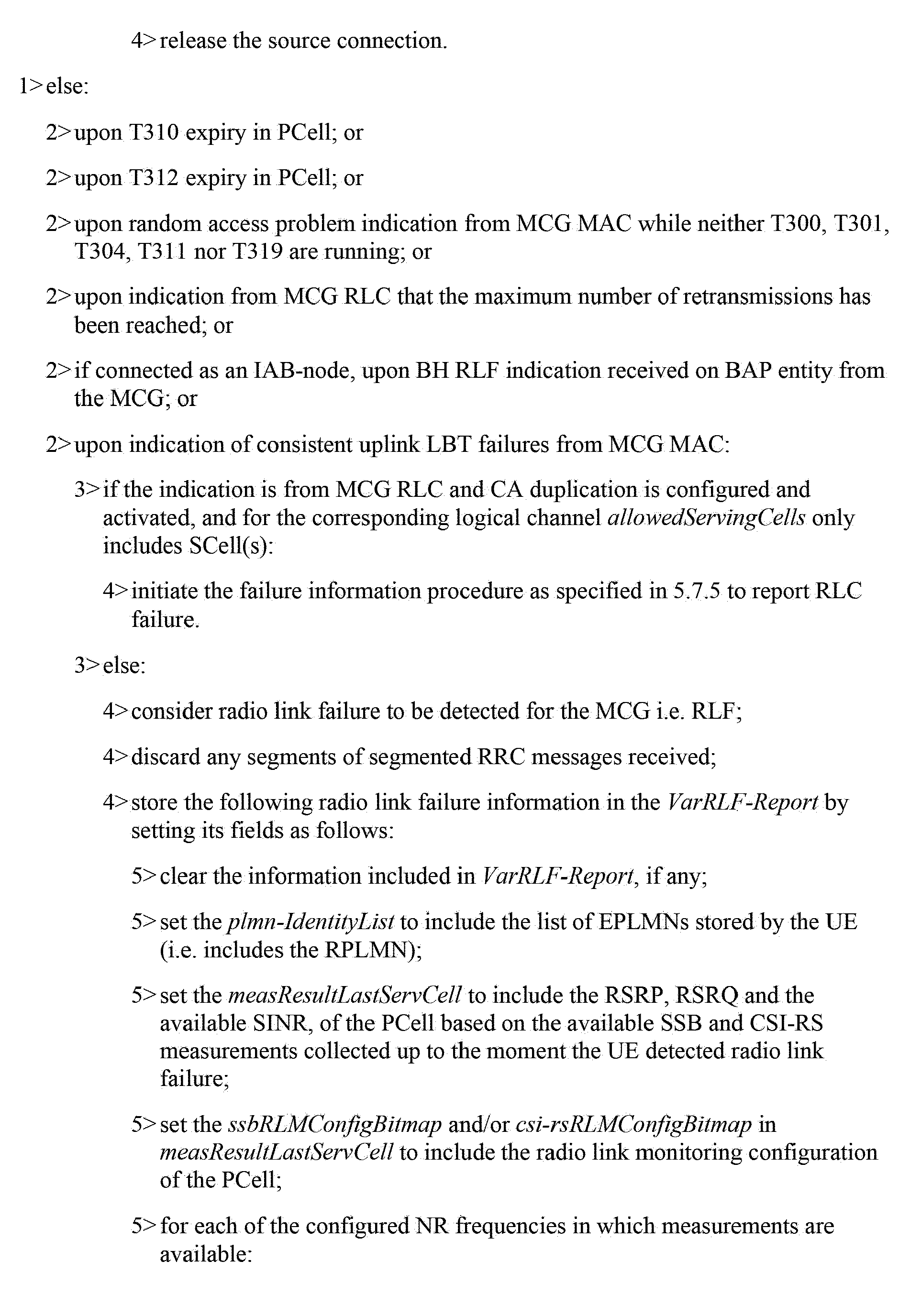

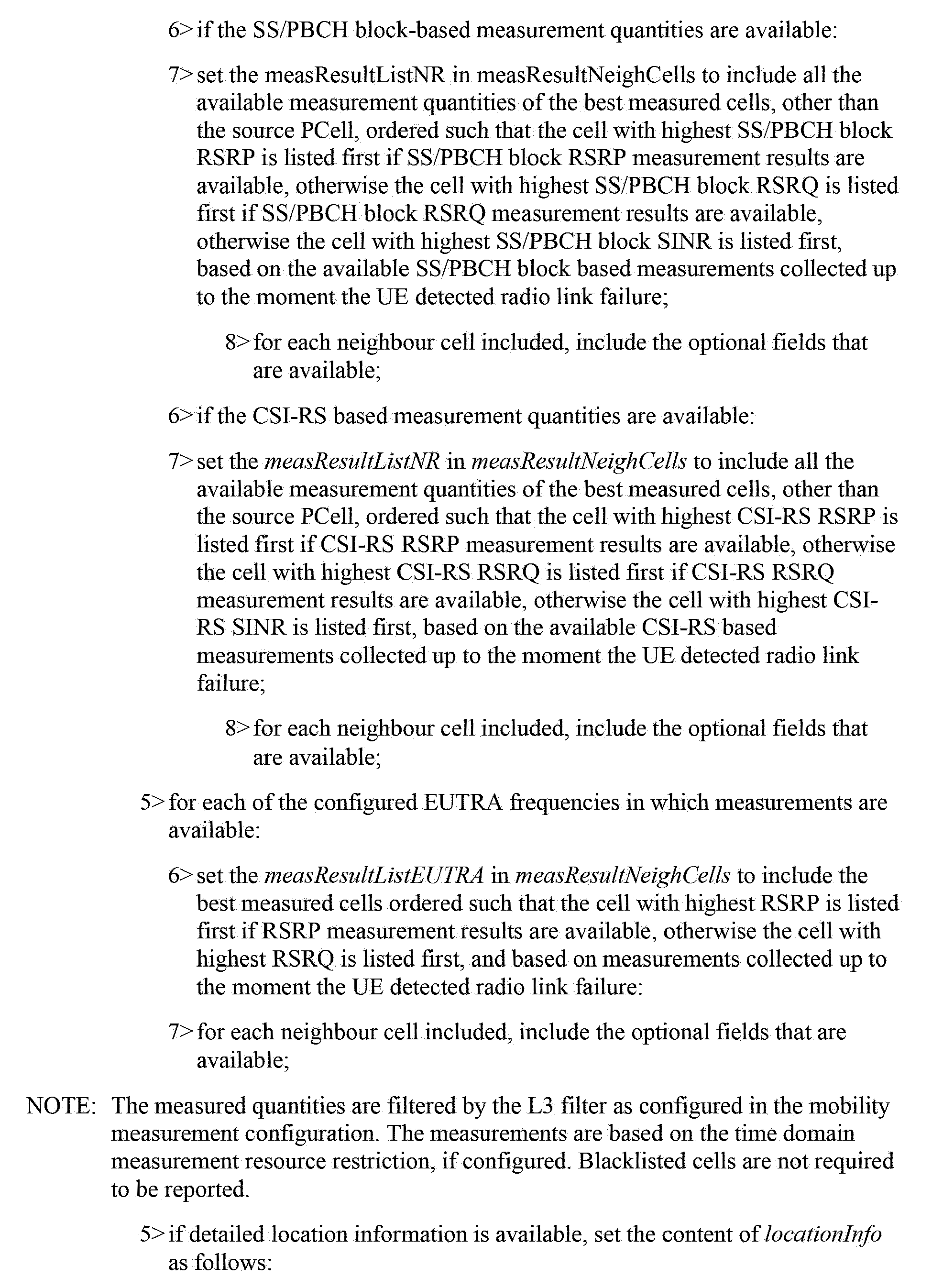

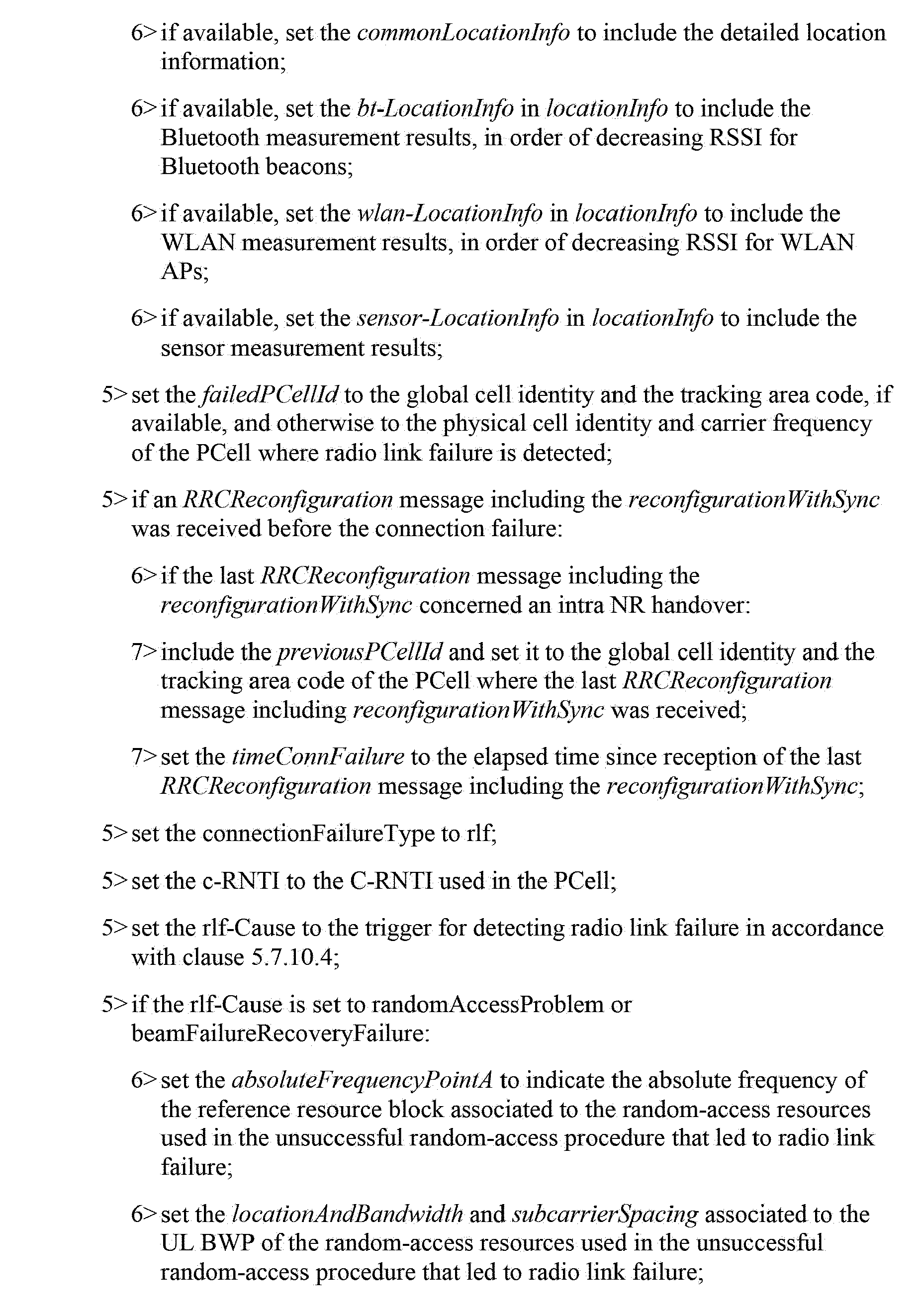

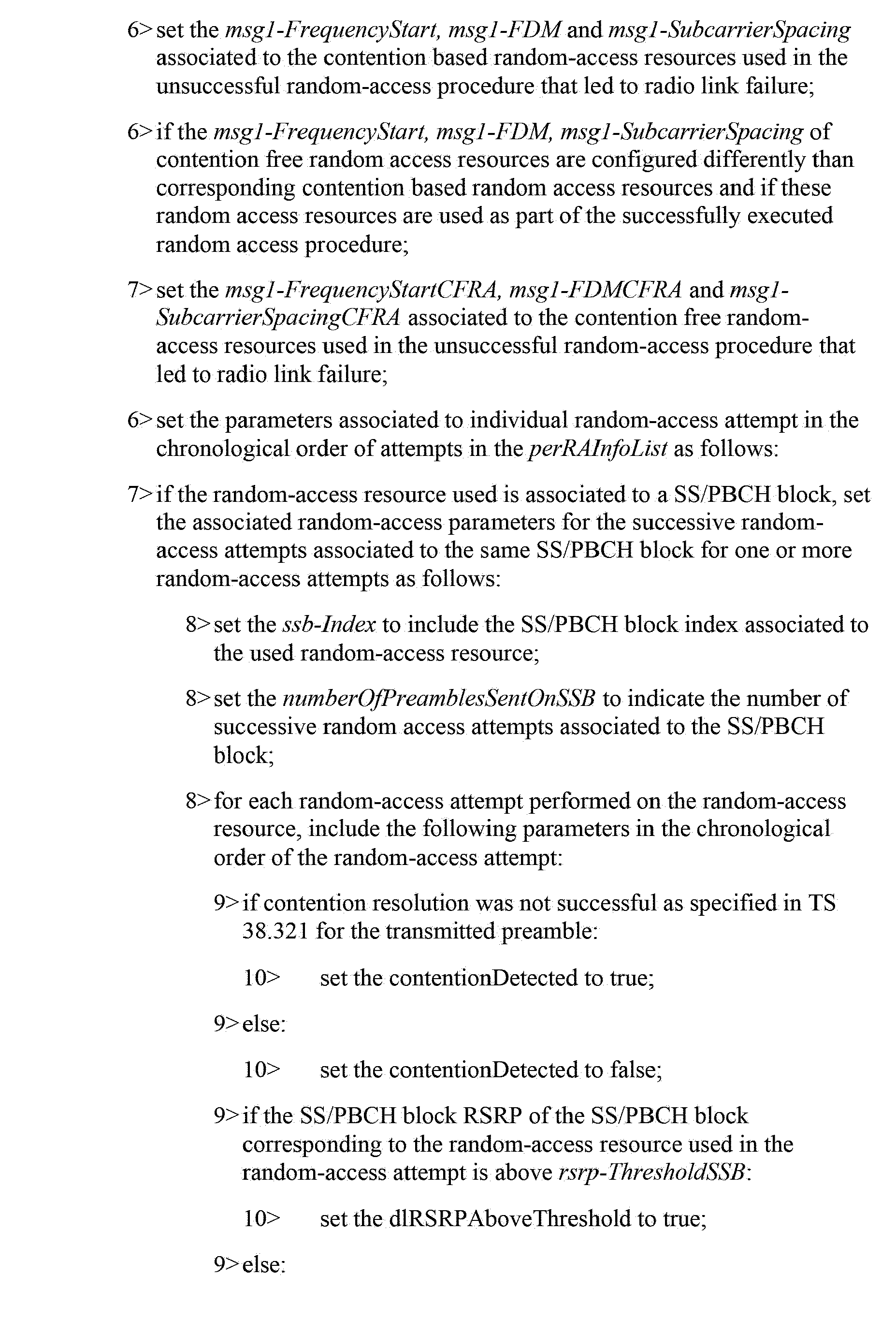

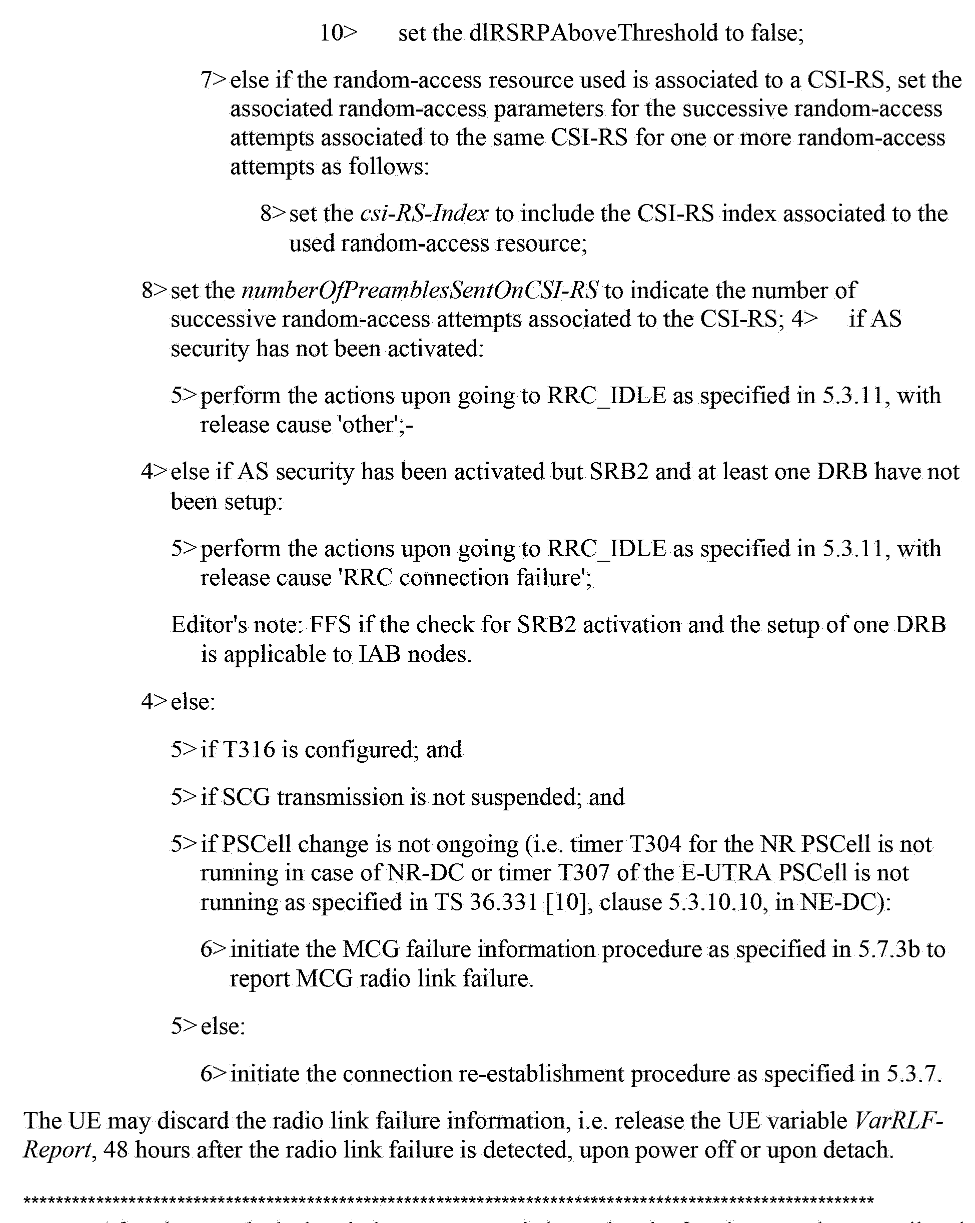

After the RLF is declared, the RLF report is logged and, after the UE selects a cell and succeeds with a reestablishment, it includes an indication that it has an RLF report available in the RRC Reestablishment Complete message to make the target cell aware of the availability. Then, upon receiving an *UEInformationRequest* message with a flag "rlf-ReportReq-r16" the UE shall include the RLF report (stored in a UE variable VarRLF-Report, as described above) in an *UEInformationResponse* message and send to the network.

The *UEInformationRequest,* and *UEInformationResponse* messages are shown below.

The *UEInformationRequest* message is used by the network to retrieve information from the UE.
Signaling radio bearer: SRB1
RLC-SAP: AM
Logical channel: DCCH
Direction: Network to UE
*UEInformationRequest message*

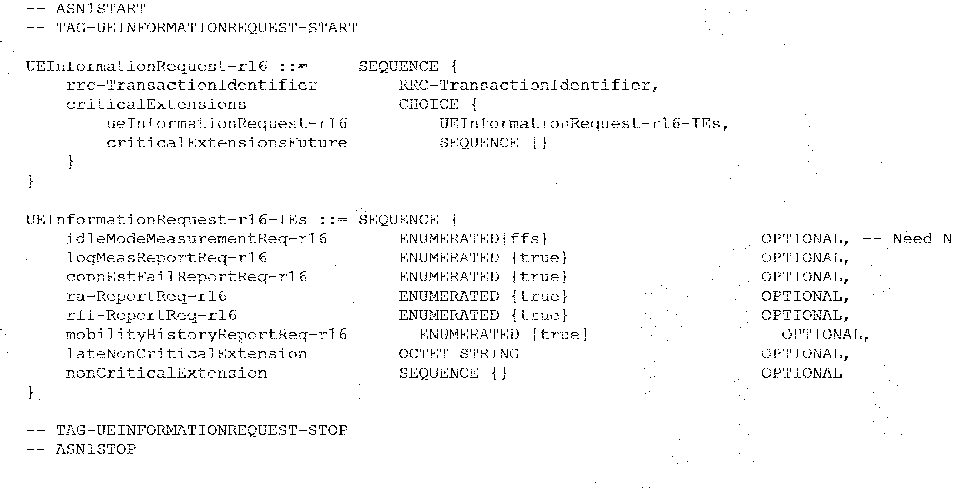

| *UEInformationRequest-IEs* field descriptions |
|---|
| *connEstFailReportReq* |
| This field is used to indicate whether the UE shall report information about the connection failure. |
| *idleModeMeasurementReq* |
| This field indicates that the UE shall report the idle/inactive measurement information, if available, to the network in the *UEInformationResponse* message. |
| *logMeasReportReq* |
| This field is used to indicate whether the UE shall report information about logged measurements. |
| *mobilityHistoryReportReq* |
| This field is used to indicate whether the UE shall report information about mobility history information. |
| *ra-ReportReq* |
| This field is used to indicate whether the UE shall report information about the random access procedure. |
| *rlf-ReportReq* |
| This field is used to indicate whether the UE shall report information about the radio link failure. |

The *UEInformationResponse* message is used by the UE to transfer information requested by the network. Signaling radio bearer: SRB1 or SRB2 (when logged measurement information is included)
RLC-SAP: AM
Logical channel: DCCH
Direction: UE to network
*UEInformationResponse message*

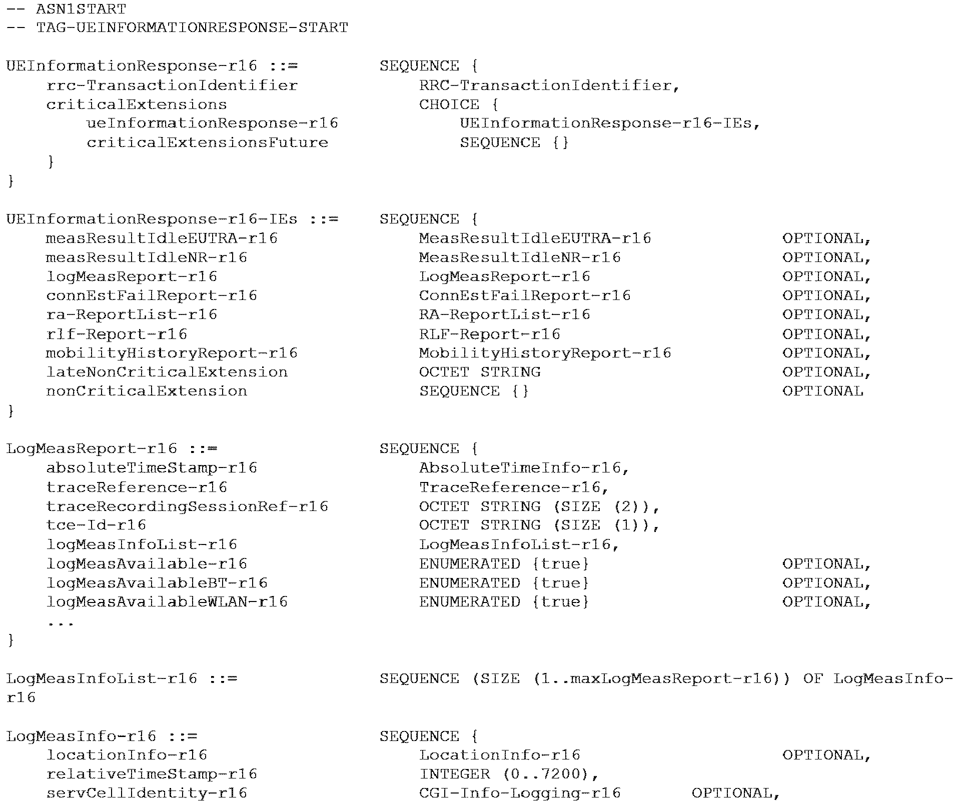

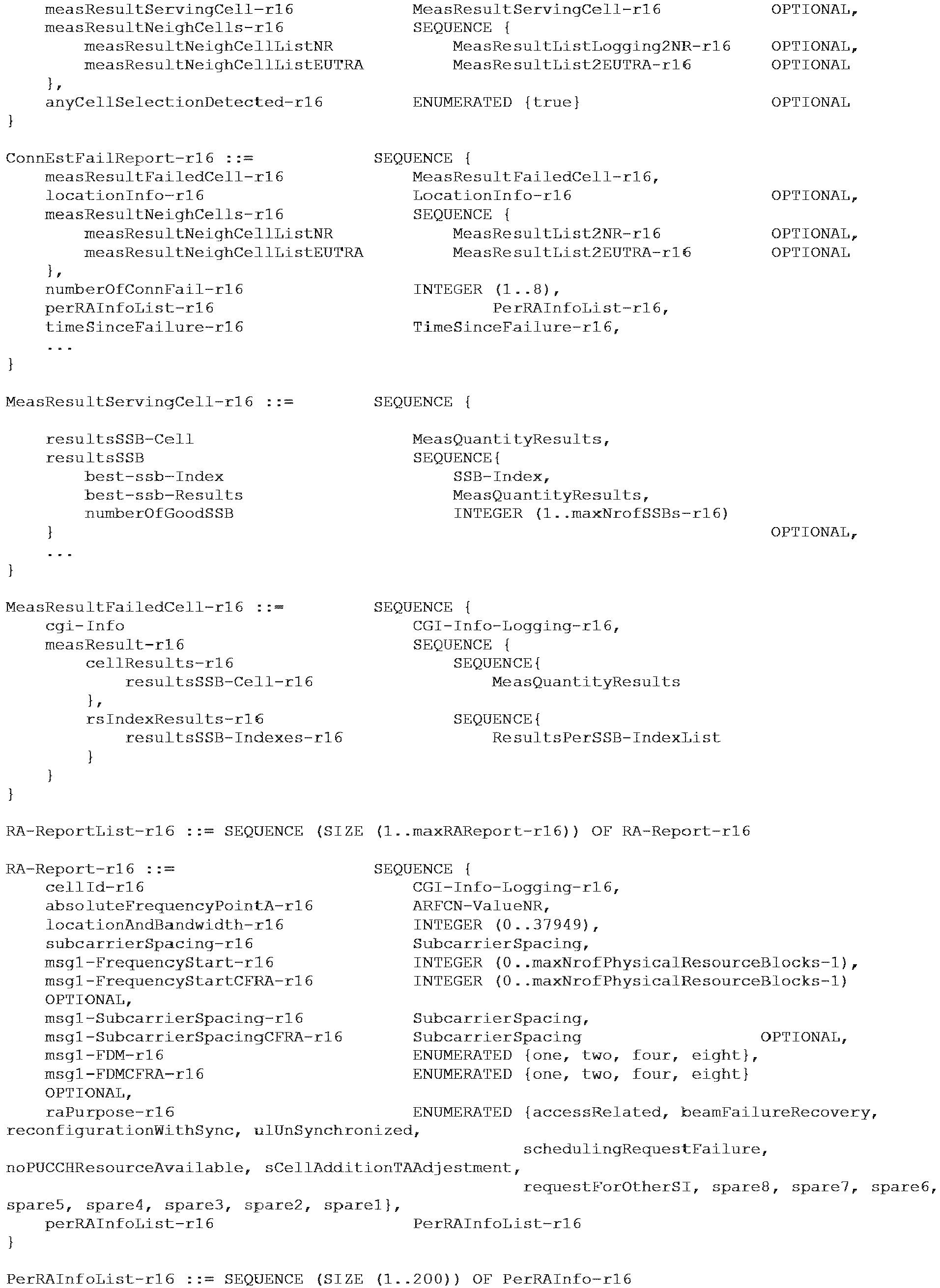

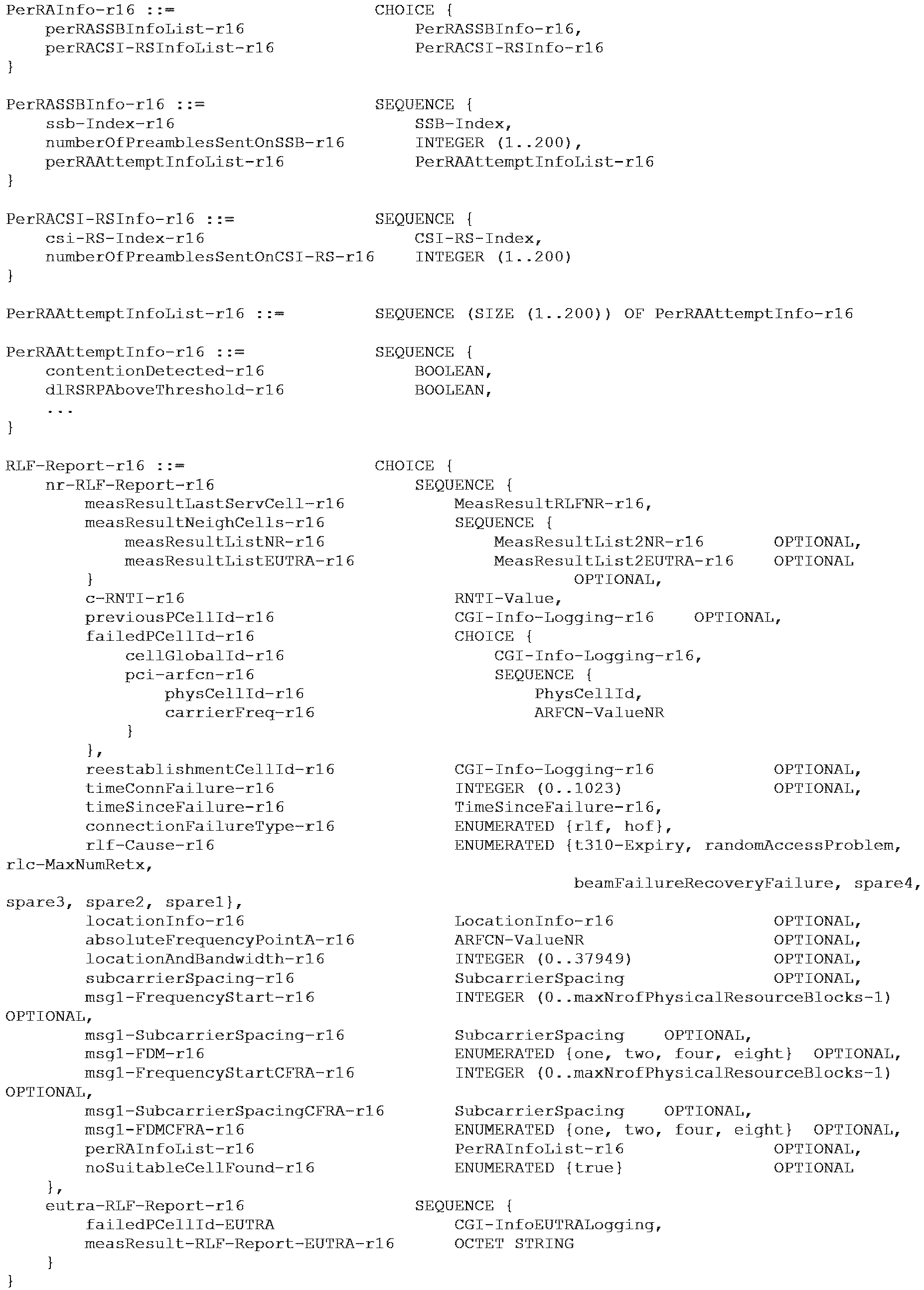

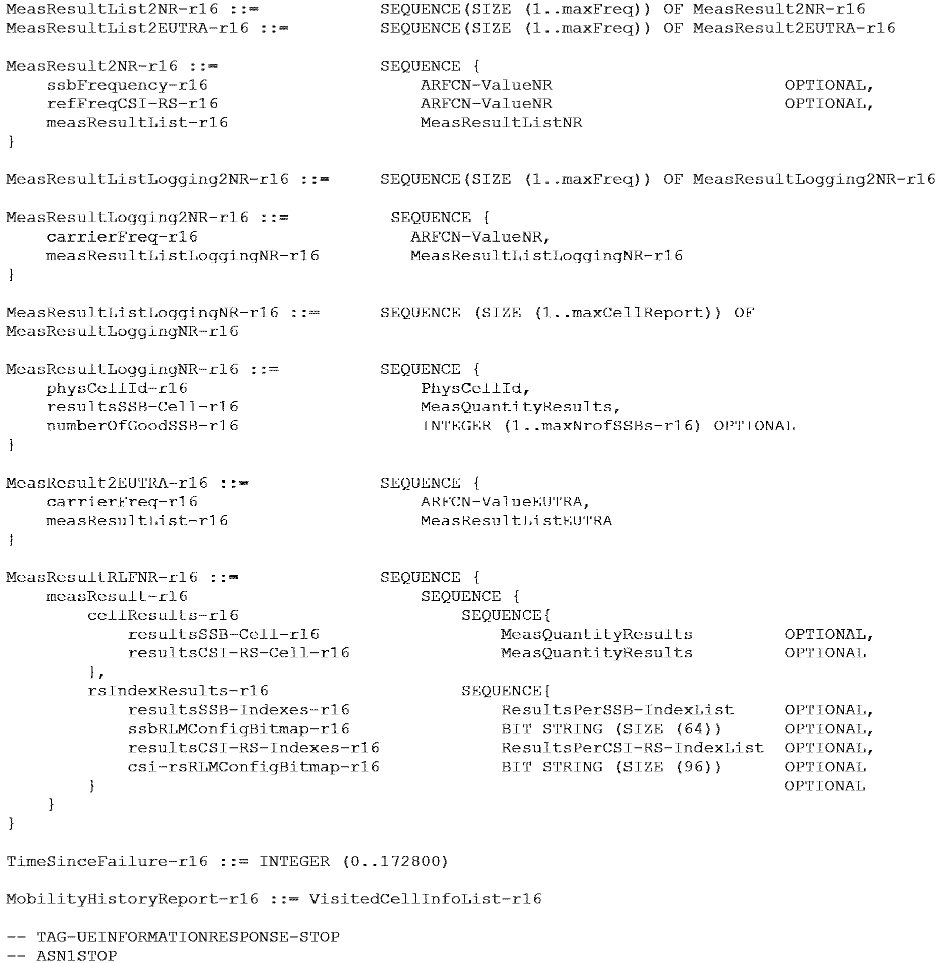

| *UEInformationResponse-IEs* field descriptions |
|---|
| *logMeasReport* |
| This field is used to provide the measurement results stored by the UE associated to logged MDT. |
| *measResultIdleEUTRA* |
| EUTRA measurement results performed during RRC_INACTIVE or RRC_IDLE. |
| *measResultIdleNR* |
| NR measurement results performed during RRC_INACTIVE or RRC_IDLE. |
| *ra-Report* |
| This field is used to provide the list of RA reports that is stored by the UE for the past up to *maxRAReport-r16* number of successful random access procedures. |
| *rlf-Report* |
| This field is used to indicated the RLF report related contents. |

| *LogMeasReport* field descriptions |
|---|
| *absoluteTimeStamp* |
| Indicates the absolute time when the logged measurement configuration logging is provided, as indicated by E-UTRAN within *absoluteTimeInfo.* |
| *logMeasResultListBT* |
| This field refers to the Bluetooth measurement results. |
| *logMeasResultListWLAN* |
| This field refers to the WLAN measurement results. |
| *measResultServCell* |
| This field refers to the log measurement results taken in the Serving cell. |
| *relativeTimeStamp* |
| Indicates the time of logging measurement results, measured relative to the *absoluteTimeStamp.* Value in seconds. |
| *tce-Id* |
| Parameter Trace Collection Entity Id: See TS 32.422. |
| *timeStamp* |
| Includes time stamps for the waypoints that describe planned locations for the UE. |
| *traceRecordingSessionRef* |
| Parameter Trace Recording Session Reference: See TS 32.422. |

| *ConnEstFailReport* field descriptions |
|---|
| *measResultFailedCell* |
| This field refers to the last measurement results taken in the cell, where connection establishment failure or connection resume failure happened. |
| *measResultNeighCells* |
| This field refers to the neighbor cell measurements when connection establishment failure or connection resume failure happened. |
| *numberOfConnFail* |
| This field is used to indicate the number of failed connection setup attempts after radio link failure. |
| *numberOfPreamblesSent* |
| This field is used to indicate the number of random access preambles that were transmitted. |
| *maxTxPowerReached* |
| This field is used to indicate whether or not the maximum power level was used for the last transmitted preamble. |
| *timeSinceFailure* |
| This field is used to indicate the time that elapsed since the connection (establishment or resume) failure. Value in seconds. The maximum value 172800 means 172800s or longer. |

| *RA-Report* field descriptions |
|---|
| *absoluteFrequencyPointA* |
| This field indicates the absolute frequency position of the reference resource block (Common RB 0). |
| *cellID* |
| This field indicates the CGI of the cell in which the associated random access procedure was performed. |
| *contentionDetected* |
| This field is used to indicate that contention was detected for the transmitted preamble in the given random access attempt or not. |
| *csi-RS-Index* |
| This field is used to indicate the CSI-RS index corresponding to the random access attempt. |
| *dlRSRPAboveThreshold* |
| This field is used to indicate whether the DL beam (SSB) quality associated to the random access attempt was above or below the threshold (*rsrp-ThresholdSSB* in *beamFailureRecoveryConfig* in UL BWP configuration of UL BWP selected for random access procedure initiated for beam failure recovery; Otherwise, *rsrp- ThresholdSSB* in *rach-ConfigCommon* in UL BWP configuration of UL BWP selected for random access procedure). |
| *locationAndBandwidth* |
| Frequency domain location and bandwidth of the bandwidth part associated to the random-access resources used by the UE. |
| *msgl-FrequencyStart* |
| Offset of lowest PRACH transmission occasion in frequency domain with respective to PRB 0 of the UL BWP. |
| *msgl-SubcarrierSpacing* |
| Subcarrier spacing of PRACH resources. |
| *number OfPreamblesSentOnCSI-RS* |
| This field is used to indicate the total number of successive RA preambles that were transmitted on the corresponding CSI-RS. |
| *numberOfPreamblesSentOnSSB* |
| This field is used to indicate the total number of successive RA preambles that were transmitted on the corresponding SSB/PBCH block. |
| *perRAAttemptInfoList* |
| This field provides detailed information about a random access attempt. |
| *perRAInfoList* |
| This field provides detailed information about each of the random access attempts in the chronological order of the random access attempts. |
| *perRACSI-RSInfoList* |
| This field provides detailed information about the successive random access attempts associated to the same CSI-RS. |
| *perRASSBInfoList* |
| This field provides detailed information about the successive random access attempts associated to the same SS/PBCH block. |
| *raPurpose* |
| This field is used to indicate the RA scenario for which the RA report entry is triggered. The RA accesses associated to Initial access from RRC IDLE, transition from RRC-INACTIVE and the MSG3 based SI request are indicated using the indicator 'accessRelated'. |
| *ssb-Index* |
| This field is used to indicate the SS/PBCH index of the SS/PBCH block corresponding to the random access attempt. |
| *ssbRSRPQualitylndicator* |
| This field is used to indicate the SS/PBCH RSRP of the SS/PBCH block corresponding to the random access attempt is above *rsrp-ThresholdSSB* or not. |
| *subcarrierSpacing* |
| Subcarrier spacing used in the BWP associated to the random-access resources used by the UE. |

| *RLF-Report* field descriptions |
|---|
| *connectionFailureType* |
| This field is used to indicate whether the connection failure is due to radio link failure or handover failure. |
| *csi-rsRLMConfigBitmap* |
| This field is used to indicate the CSI-RS indexes that are also part of the RLM configurations. |
| *c-RNTI* |
| This field indicates the C-RNTI used in the PCell upon detecting radio link failure or the C-RNTI used in the source PCell upon handover failure. |
| *failedCellId* |
| This field is used to indicate the cell in which connection establishment failed. |
| *failedPCellId* |
| This field is used to indicate the PCell in which RLF is detected or the target PCell of the failed handover. The UE sets the ARFCN according to the frequency band used for transmission/ reception when the failure occurred. |
| *failedPCellId-EUTRA* |
| This field is used to indicate the PCell in which RLF is detected or the target PCell of the failed handover in an E-UTRA RLF report. |
| *measResultLastServCell* |
| This field refers to the last measurement results taken in the PCell, where radio link failure or handover failure happened. |
| *measResultListEUTRA* |
| This field refers to the last measurement results taken in the neighboring EUTRA Cells, when the radio link failure or handover failure happened. |
| *measResultListNR* |
| This field refers to the last measurement results taken in the neighboring NR Cells, when the radio link failure or handover failure happened. UE does not include the *resultsSSB-Indexes* IE, if the *measResultListNR* IE is included in the *LogMeasInfo-r16* IE. |
| *measResultServCell* |
| This field refers to the log measurement results taken in the Serving cell. |
| *measResult-RLF-Report-EUTRA* |
| Includes the E-UTRA *RLF-Report-r9* IE as specified in TS 36.331. |
| *noSuitableCellFound* |
| This field is set by the UE when the T311 expires. |
| *previousPCellld* |
| This field is used to indicate the source PCell of the last handover (source PCell when the last *RRCReconfiguration* message including *reconfigurationWithSync* was received). |
| *reestablishmentCellId* |
| This field is used to indicate the cell in which the re-establishment attempt was made after connection failure. |
| *rlf-Cause* |
| This field is used to indicate the cause of the last radio link failure that was detected. In case of handover failure information reporting (i.e., the *connectionFailureType* is set to *'hof'*), the UE is allowed to set this field to any value. |
| *ssbRLMConfigBitmap* |
| This field is used to indicate the SS/PBCH block indexes that are also part of the RLM configurations. |
| *timeConnFailure* |
| This field is used to indicate the time elapsed since the last HO initialization until connection failure. Actual value = field value * 100ms. The maximum value 1023 means 102.3s or longer. |
| *timeSinceFailure* |
| This field is used to indicate the time that elapsed since the connection (radio link or handover) failure. Value in seconds. The maximum value 172800 means 172800s or longer. |

Based on the contents of the RLF report (e.g., the globally unique identity of the last serving cell, where the failure was originated), the cell in which the UE reestablishes can forward the RLF report to the last serving cell. This forwarding of the RLF report is done to aid the original serving cell with tuning of the handover related parameters (e.g., measurement report triggering thresholds) as the original serving cell was the one who had configured the parameters associated to the UE that led to the RLF.

Two different types of inter-node messages have been standardized in NR for that purpose, the failure indication and the handover report (in 38.423).

There currently exist certain challenges. For example, the RLF report may include a reconnection cell identifier (ID). The reconnection cell is the cell that the UE connects to in the network after a re-establishment failure that was triggered by a radio link failure or a handover failure. The reconnection cell ID can be used for mobility parameters optimization, when re-establishment procedure failed. In fact, the reconnection cell can be used as a target cell for the next coming handovers. The information included in the RLF report includes the following information.
1) CGI of the E-UTRA or NR cell that served the UE at the last handover initialization in NR RLF Report. Previous PCell Id is either NR CGI or E-UTRA CGI. E-UTRA CGI of previous PCell may be included in the NR RLF Report.
2) CGI of the target E-UTRA or NR cell of the handover (in case of handover failure) in NR RLF Report. Failed PCell Id is either NR CGI or E-UTRA CGI. E-UTRA CGI of failed PCell may be included in the NR RLF Report.
3) CGI of the NR or E-UTRA cell that served the UE at the last handover initialization in LTE RLF Report. Previous PCell Id is either NR CGI or E-UTRA CGI. NR CGI may be included in the LTE RLF Report.
4) CGI of the target NR or E-UTRA cell of the handover (in case of handover failure) in LTE RLF Report. Failed PCell Id is either NR CGI or E-UTRA CGI. NR CGI may be included in the LTE RLF Report.
5) CGI of successful re-connected NR cell or E-UTRA cell: For inter-RAT and inter-system MRO, inclusion of successful re-connected cell CGI helps the network to detect the root cause of the failure. For E-UTRA cell, the TAC of the successful re-connected cell is also needed.
6) Time interval between HOF/RLF and successful RRC re-connection: This information helps the network to understand whether the re-connection cell could be used to detect the root cause of failure event.
7) Source PCell of the failed handover using the NR RRC format in UEInformationResponse message: For handover failure, the UE RLF Report may be forwarded to the source node that triggered the handover. The source PCellId in NR RRC format is needed. failedPCellId-EUTRA should be PCell in which RLF is detected or the source PCell of the failed handover.

Currently and as part of NR and LTE RRC specifications (namely 38.331 and 36.331 respectively) when a UE declares a radio link failure it tries to re-establish a connection, and after it finds a suitable cell as part of re-establishment procedure, it logs re-establishment cells ID as part of RLF report. Thus, the failed cell can use the information to optimize the handover parameters.

However, if re-establishment procedure fails the UE leaves the RRC_Connected state and makes a transition from RRC_IDLE mode to RRC Connected mode. In such cases, as mentioned above, if reconnection procedure takes place in a short period of time, reconnect cell ID can be used for optimizing the HO parameters (i.e., it may be seen as a potential target cell for the next coming handovers).

The UE sets the contents of the *RRCReestablishmentRequest* message as follows. If the procedure was initiated due to radio link failure or handover failure, then the UE sets the *reestablishmentCellId* in the *VarRLF-Report* to the global cell identity of the selected cell.

However, as specified in the RRC specification 38.331-g00, the re-establishment cell ID is included no matter whether the re-establishment procedure is successful or not. In fact, once a suitable cell as part of re-establishment procedure is found, it's cell ID will be logged in the RLF report. However, re-establishment procedure may fail after inclusion of re-establishment cell ID in RLF report.

In such scenarios, a UE after a successful re-establishment procedure includes the re-establishment cell ID. Now if network does not fetch the RLF report until UE goes back to the RRC_IDLE mode and comes back to the RRC_Connected mode, the UE may include the re-connection cell ID and includes the re-connection cell ID (after transition from RRC_IDLE mode to RRC Connected mode). After fetching the RLF report it would not be clear to the network whether the re-establishment procedure was successful or not. This causes confusion in analysis of re-establishment and reconnect cell IDs.

### SUMMARY

Based on the description above, certain challenges currently exist with detecting reestablishment failure at a network node. Certain aspects of the present disclosure and their embodiments may provide solutions to these or other challenges.

According to one aspect, the above-indicated difficulties are addressed with a computer program product according to claim 1.

According to another aspect, the above-indicated difficulties are addressed with a computer program product according to claim 8.

### BRIEF DESCRIPTION OF THE DRAWINGS

For a more complete understanding of the disclosed embodiments and their features and advantages, reference is now made to the following description, taken in conjunction with the accompanying drawings, in which:
FIGURE 1 is a timing diagram illustrating radio link failure (RLF) procedures in long term evolution (LTE);
FIGURE 2 illustrates physical downlink control channel (PDCCH) may be scheduled anywhere over the whole downlink transmission bandwidth;
FIGURE 3 is a flow diagram illustrating an example contention-based random access (CBRA) procedure;
FIGURE 4 is a block diagram illustrating an example wireless network;
FIGURE 5 illustrates an example user equipment, according to certain embodiments;
FIGURE 6 is flowchart illustrating an example method in a wireless device, according to certain embodiments;
FIGURE 7 is flowchart illustrating an example method in a network node, according to certain embodiments;
FIGURE 8 illustrates a schematic block diagram of a wireless device and a network node in a wireless network, according to certain embodiments;
FIGURE 9 illustrates an example virtualization environment, according to certain embodiments;
FIGURE 10 illustrates an example telecommunication network connected via an intermediate network to a host computer, according to certain embodiments;
FIGURE 11 illustrates an example host computer communicating via a base station with a user equipment over a partially wireless connection, according to certain embodiments;
FIGURE 12 is a flowchart illustrating a method implemented, according to certain embodiments;
FIGURE 13 is a flowchart illustrating a method implemented in a communication system, according to certain embodiments;
FIGURE 14 is a flowchart illustrating a method implemented in a communication system, according to certain embodiments; and
FIGURE 15 is a flowchart illustrating a method implemented in a communication system, according to certain embodiments.

### DETAILED DESCRIPTION

As described above, certain challenges currently exist with detecting reestablishment failure at a network node. Certain aspects of the present disclosure and their embodiments may provide solutions to these or other challenges. For example, some embodiments indicate that a re-establishment procedure is failed and a user equipment (UE) logs the re-connect cell ID only when radio link failure and re-establishment failures happen successively. Thus, after receiving the radio link failure (RLF) report, the network may be able to deduce whether re-establishment procedure is failed or not.

Particular embodiments are described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

The following is an example of how particular embodiments may be captured in a radio resource control (RRC) specification.

The following is an example implementation of Option 1 described in the Summary above in RRC specification 38.331:

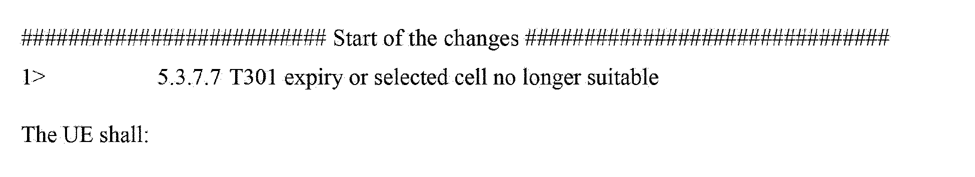

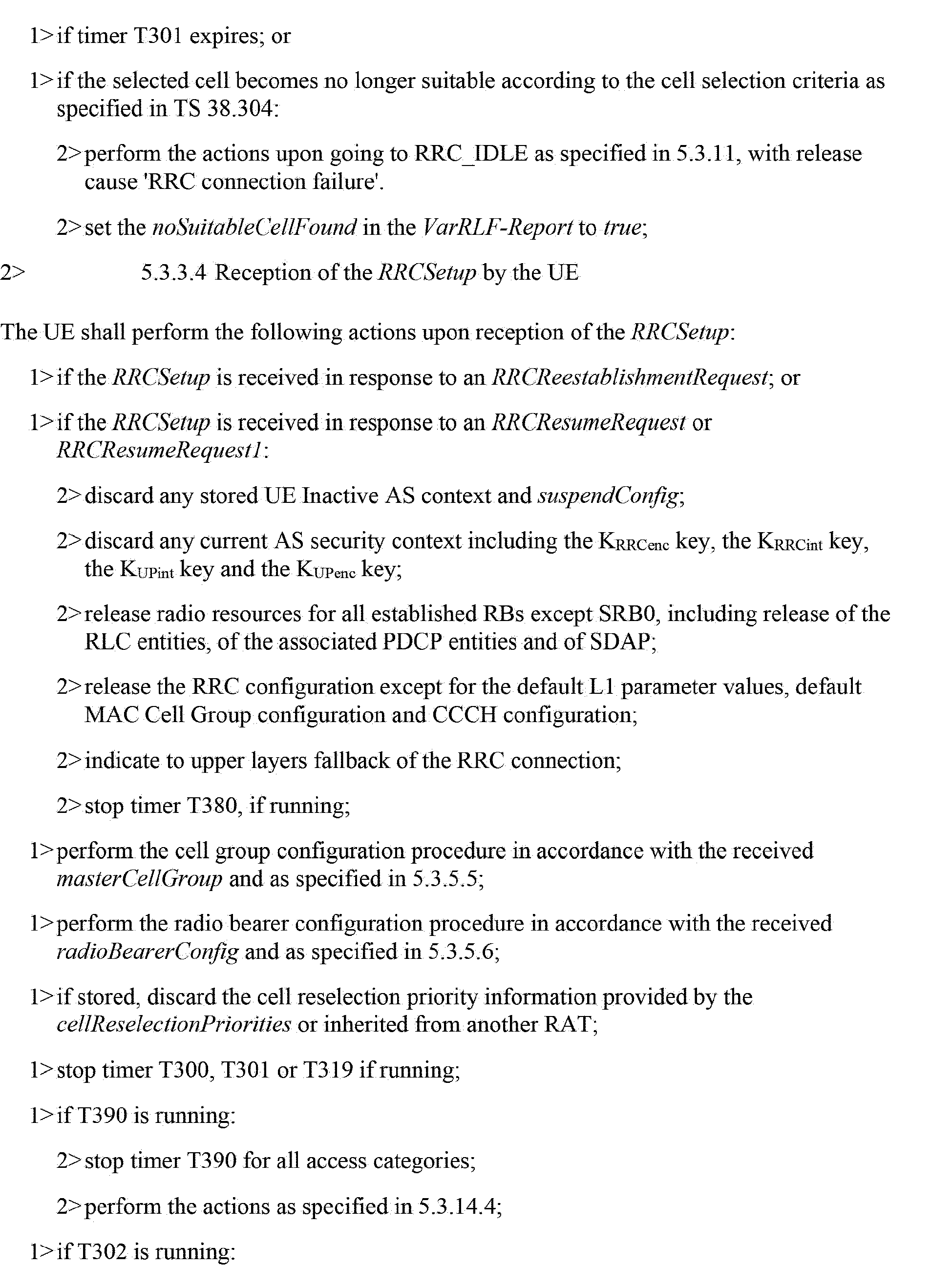

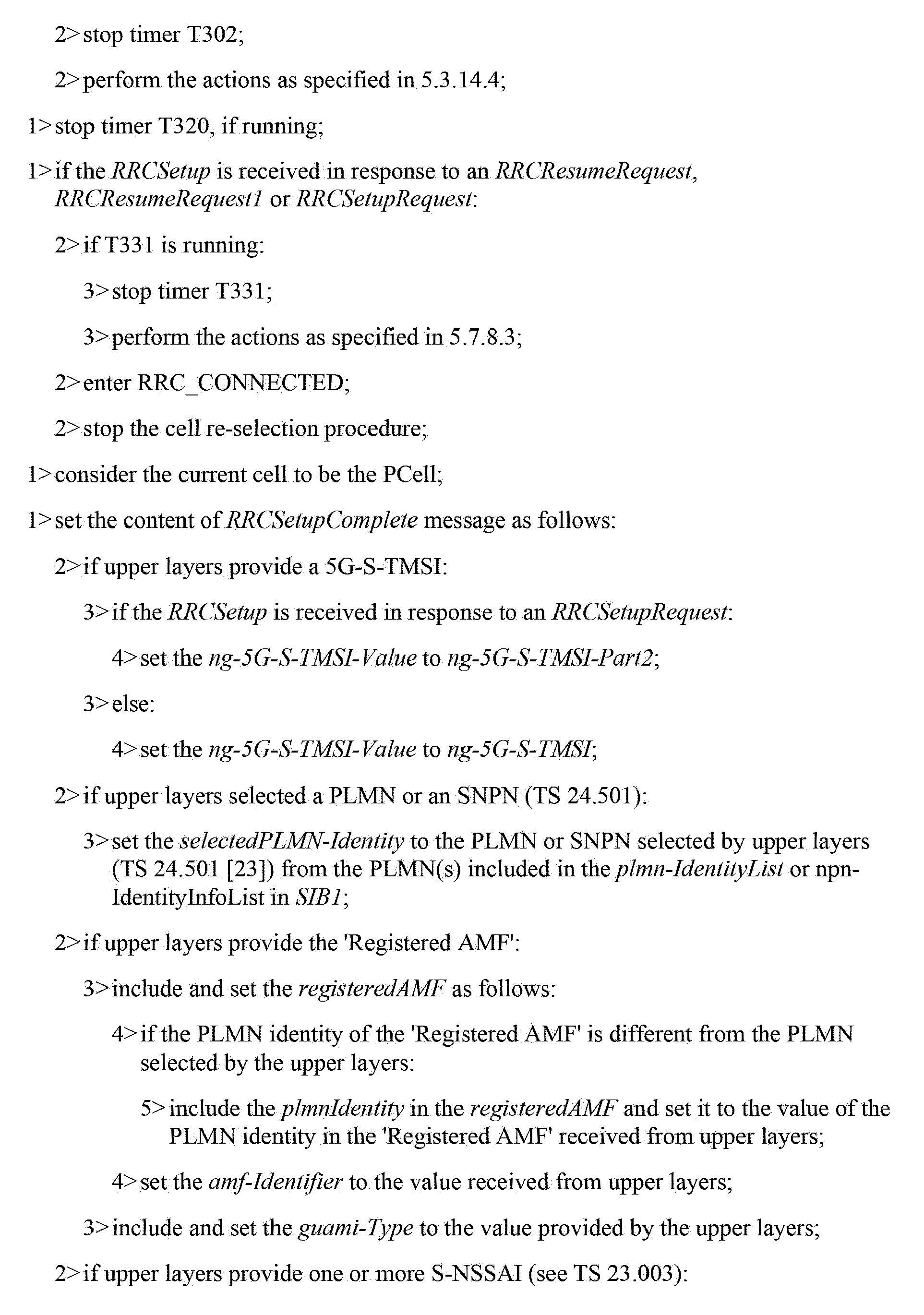

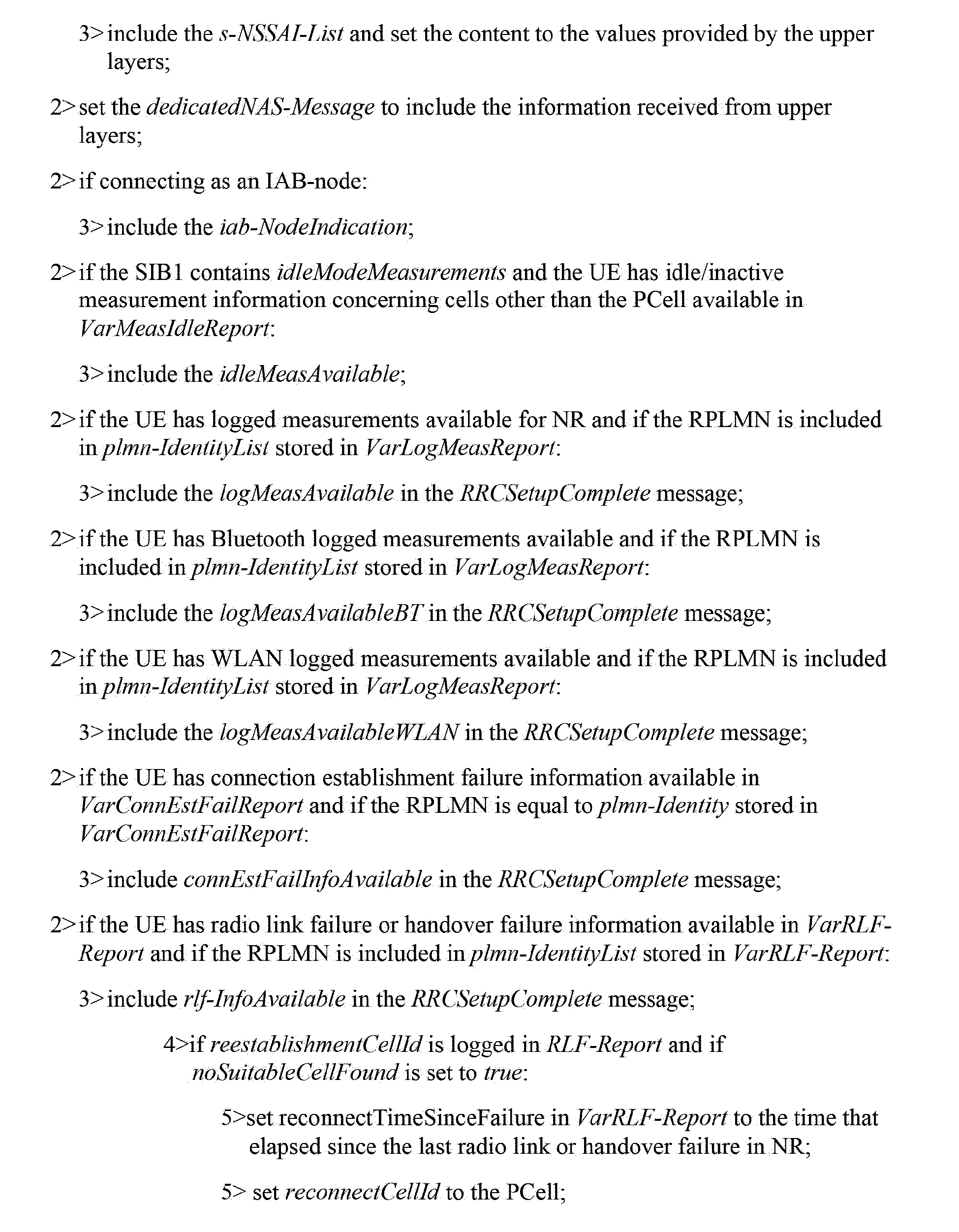

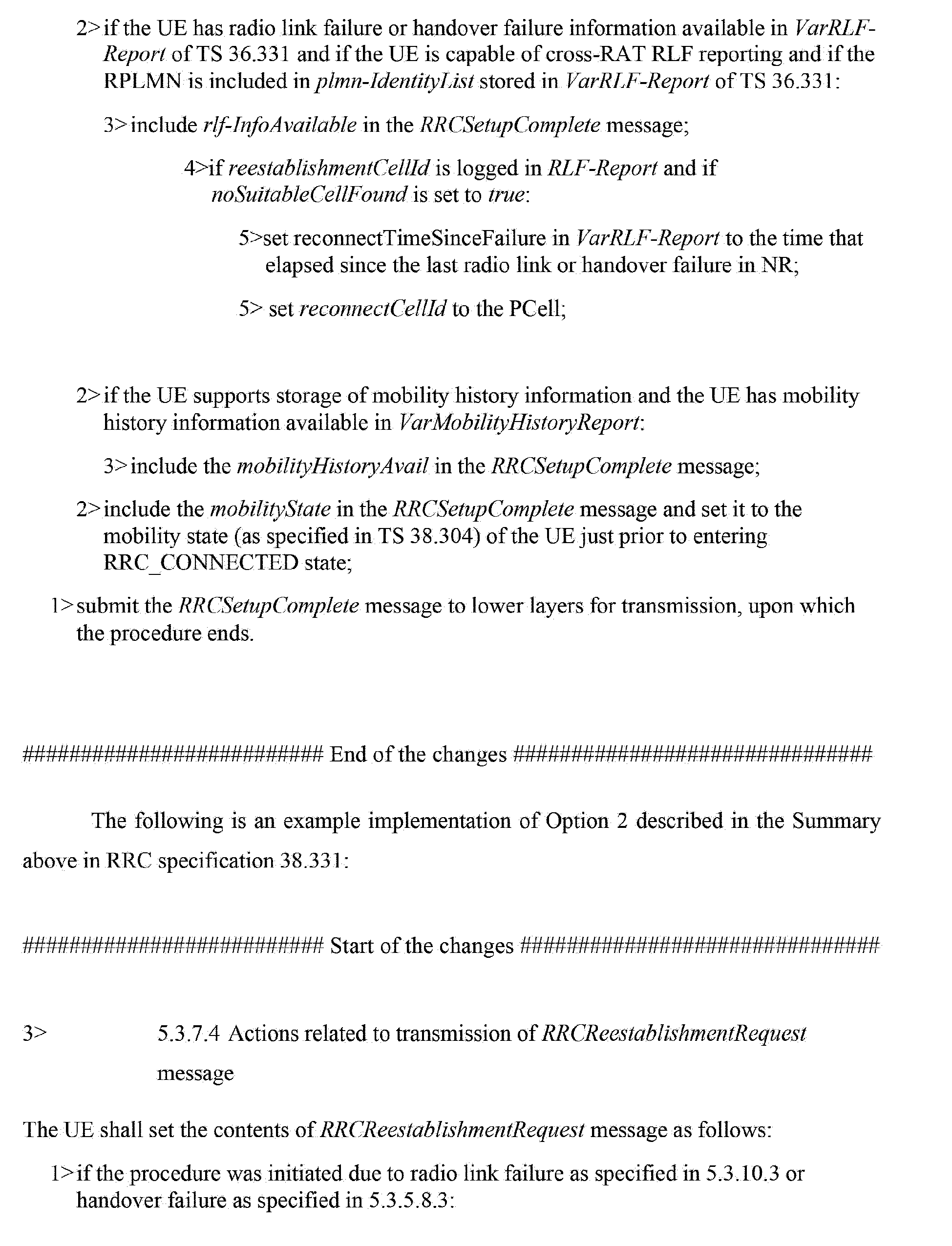

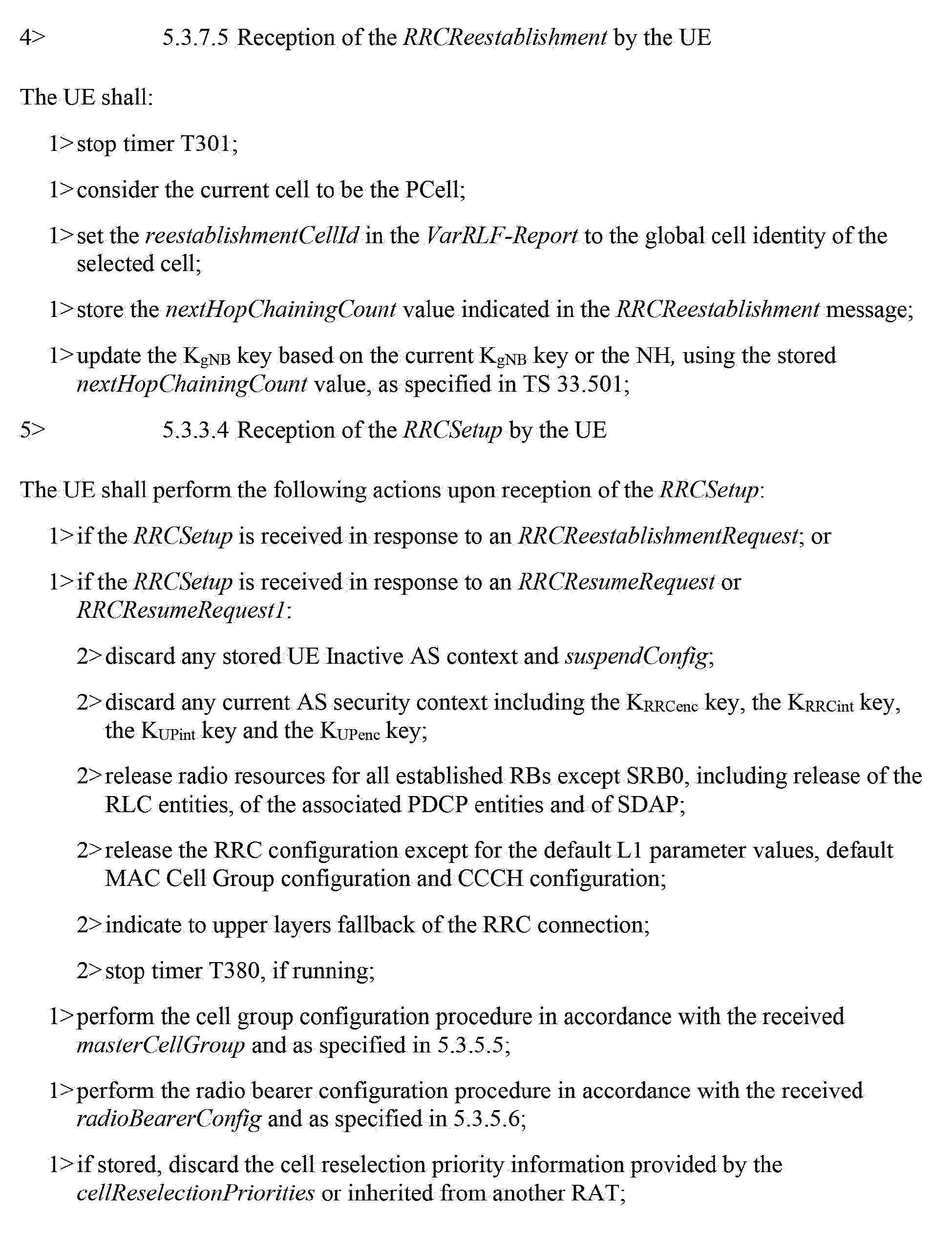

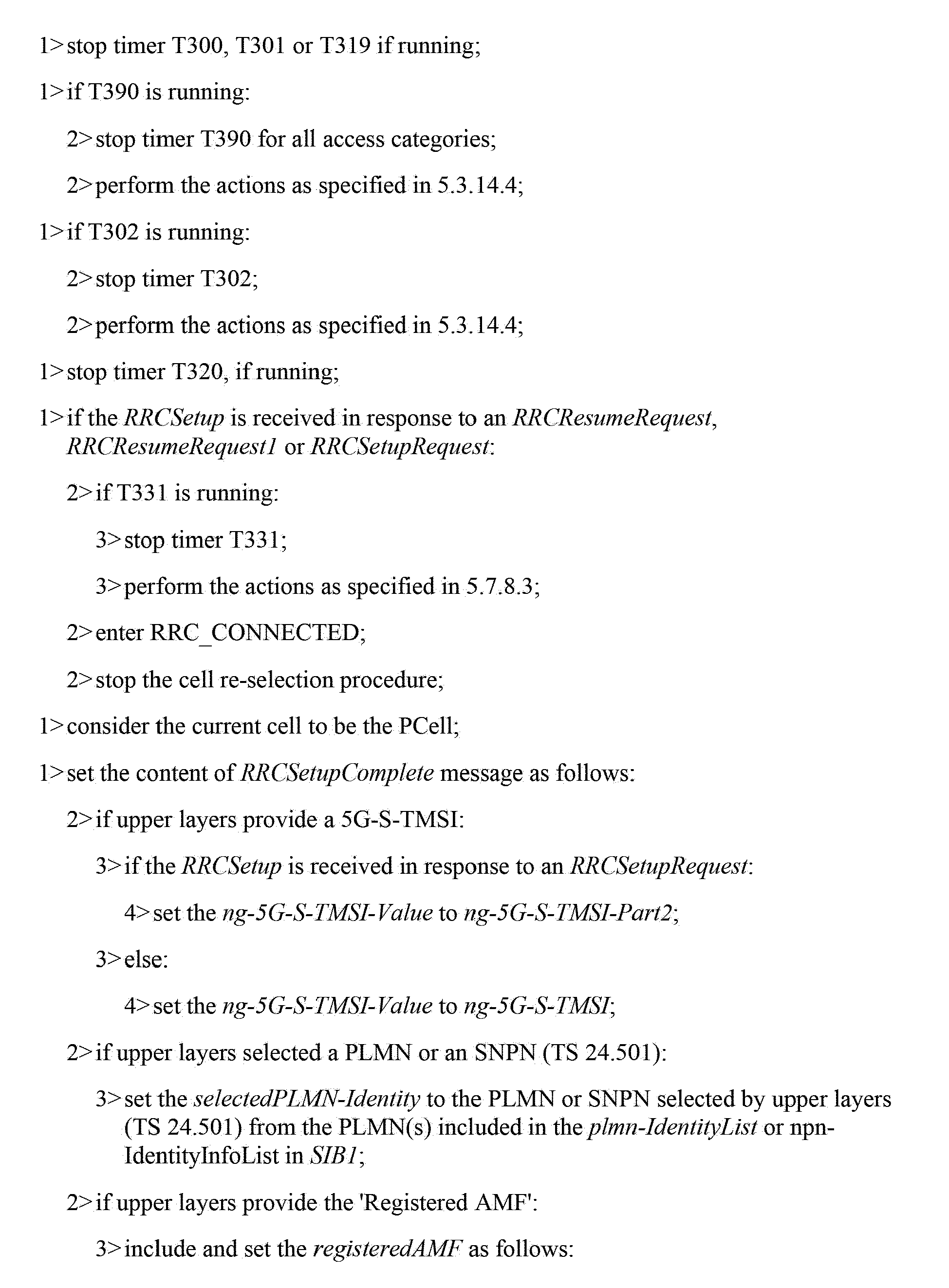

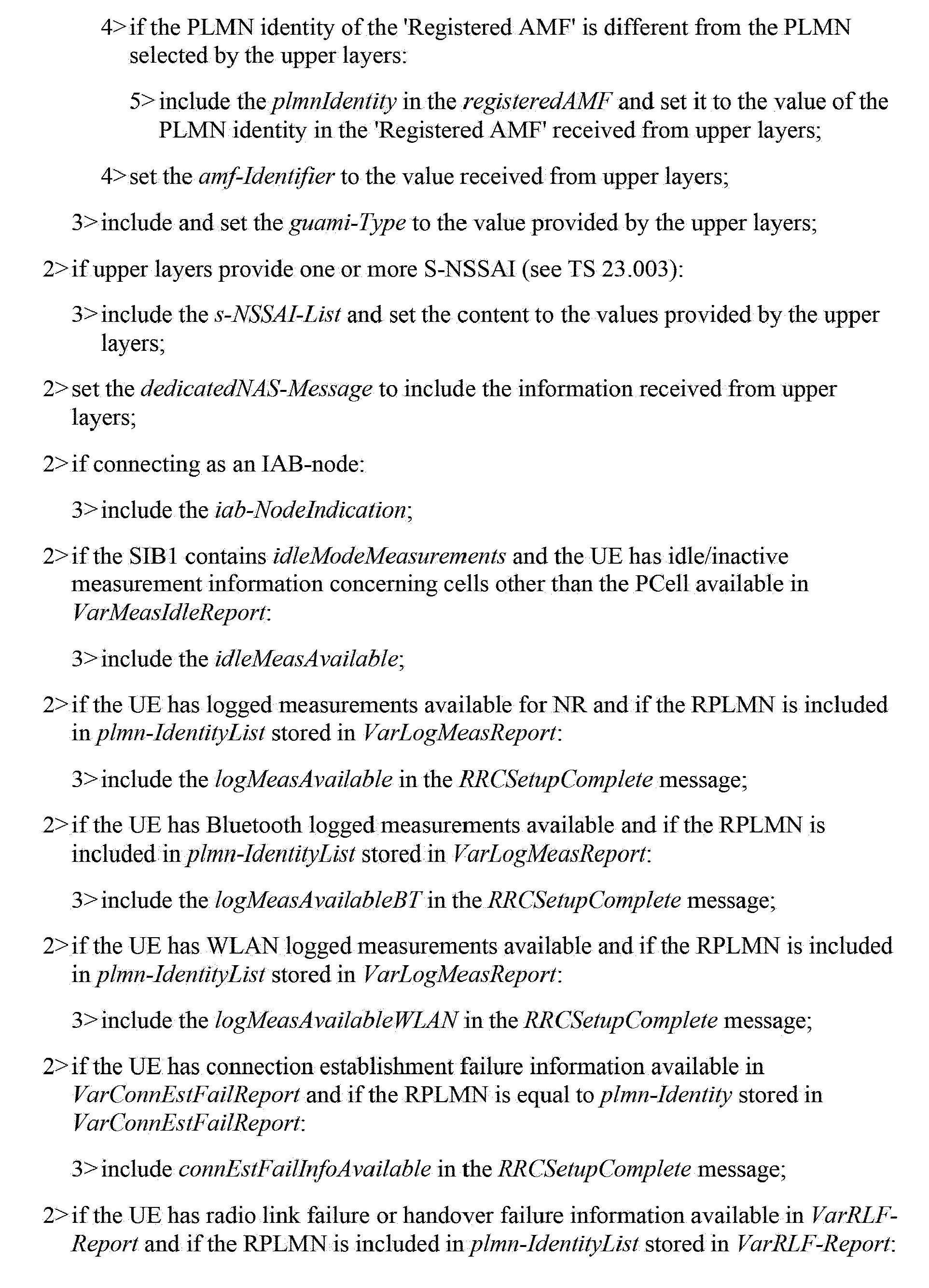

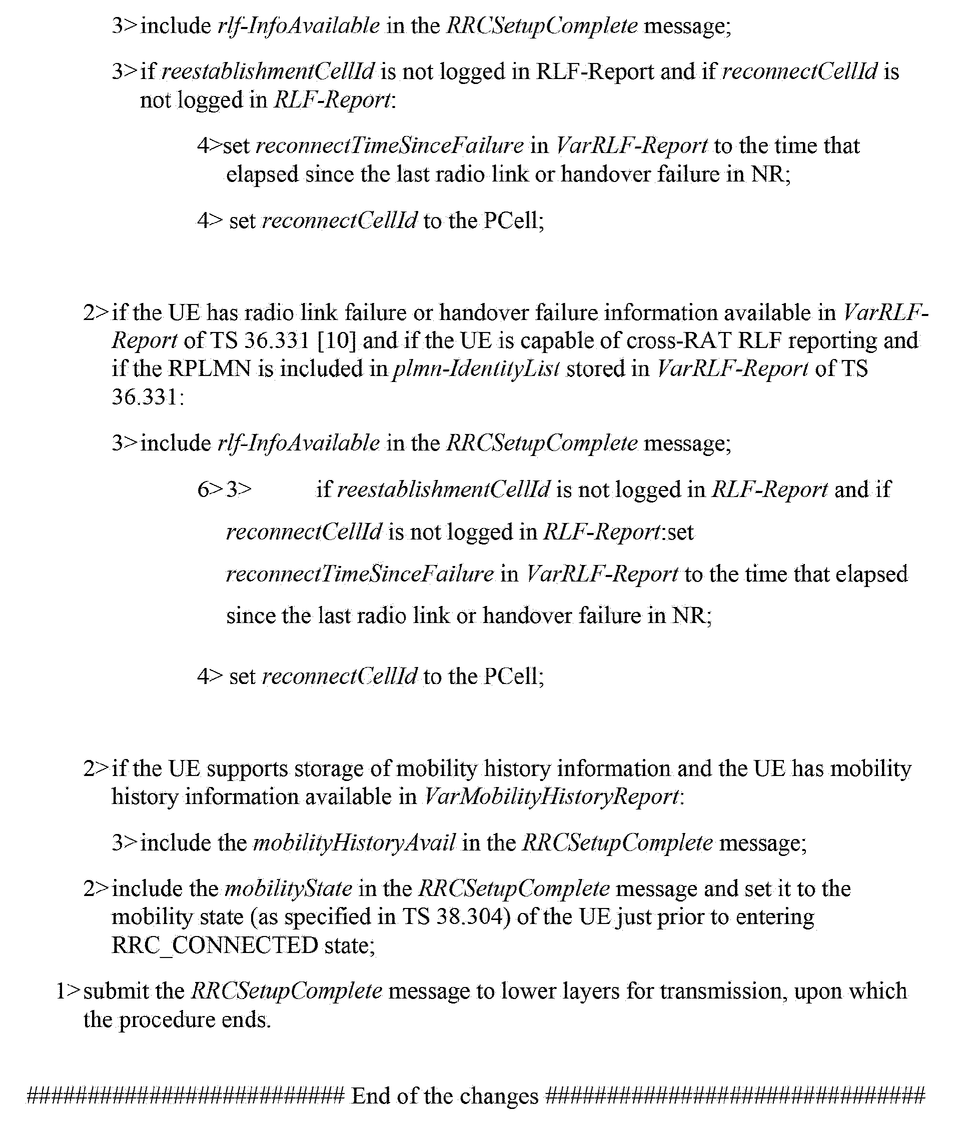

The following are some example messages.

The *UEInformationResponse* message is used by the UE to transfer information requested by the network.

### Signaling radio bearer: SRB1 or SRB2 (when logged measurement information is included) RLC-SAP: AM

### Logical channel: DCCH

### Direction: UE to network

### UEInformationResponse message

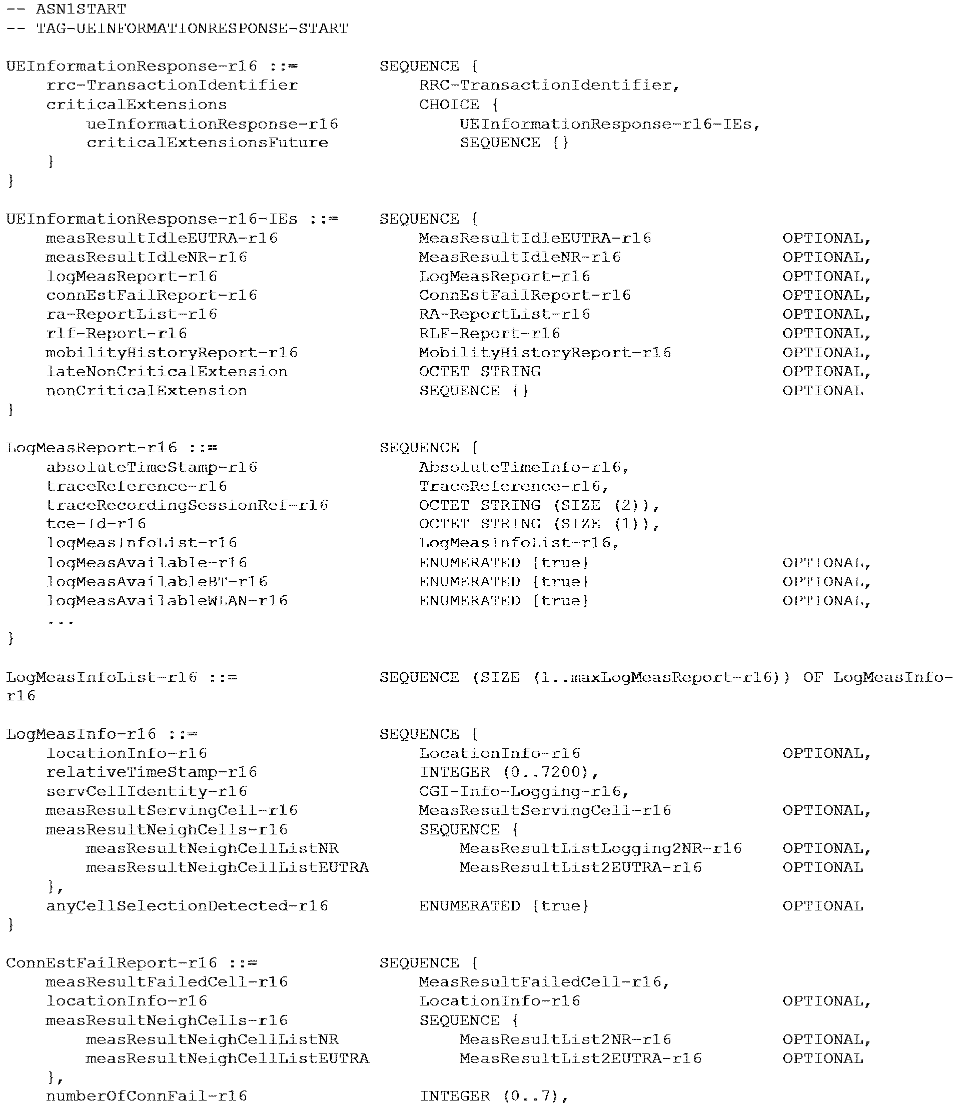

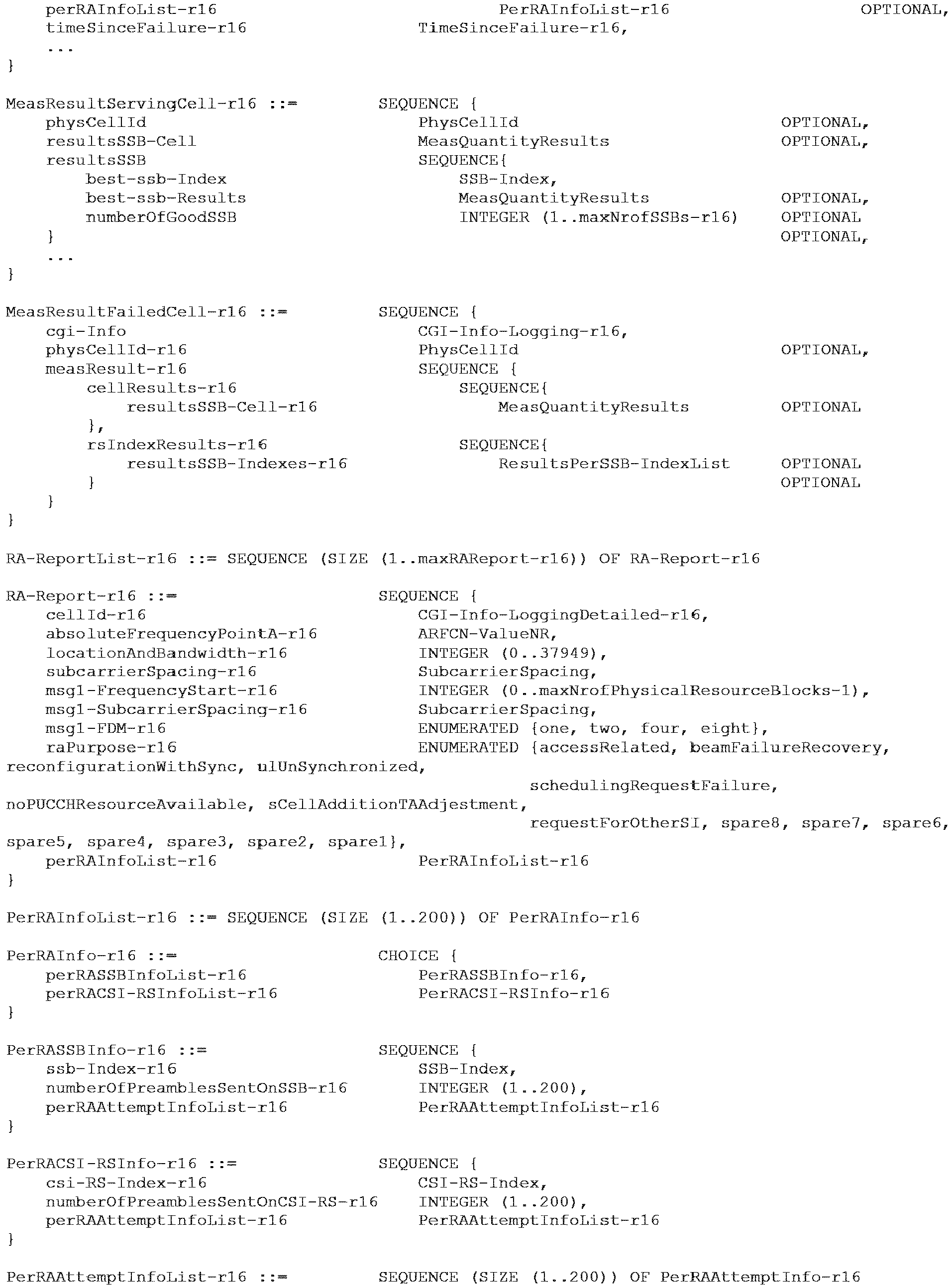

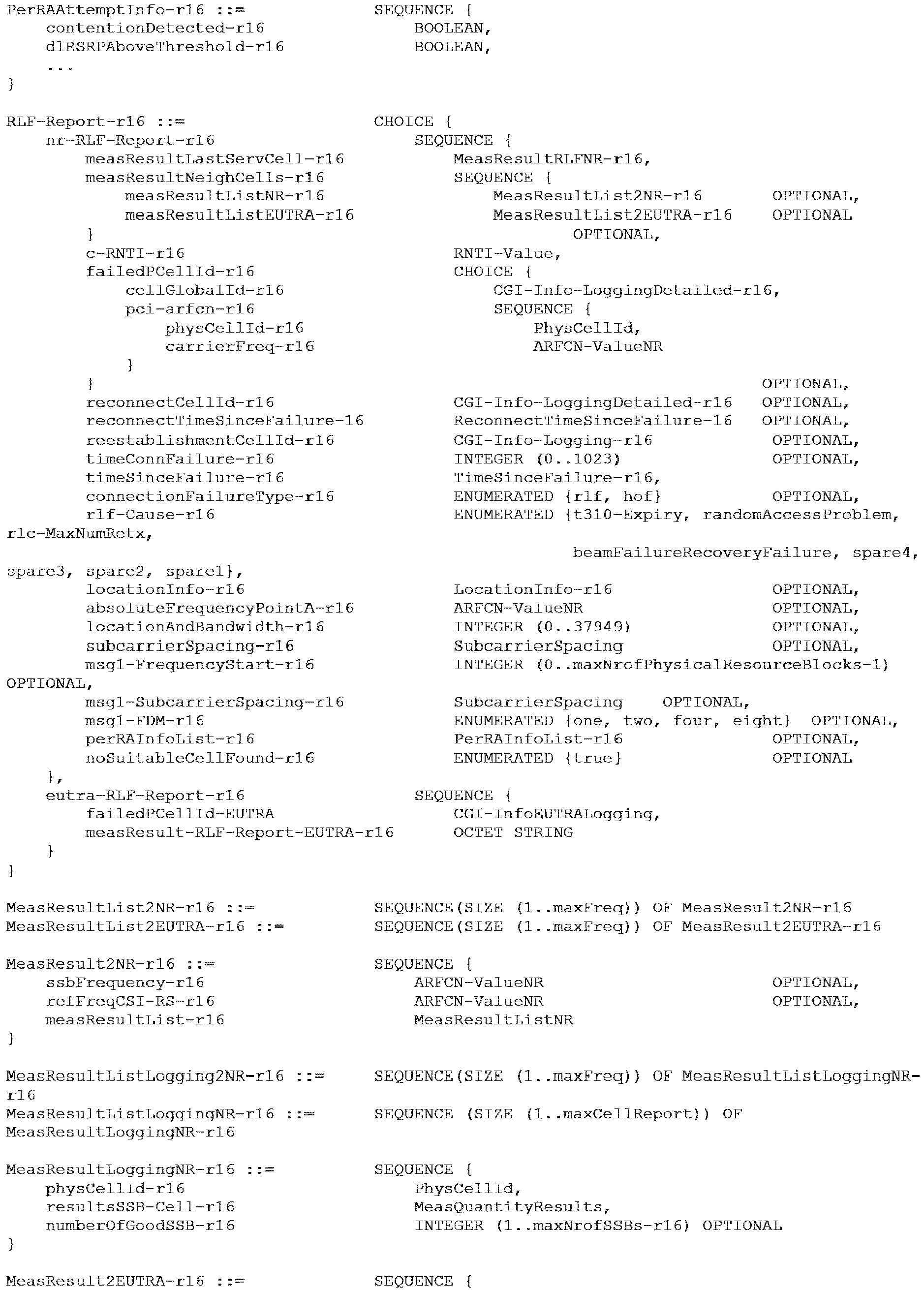

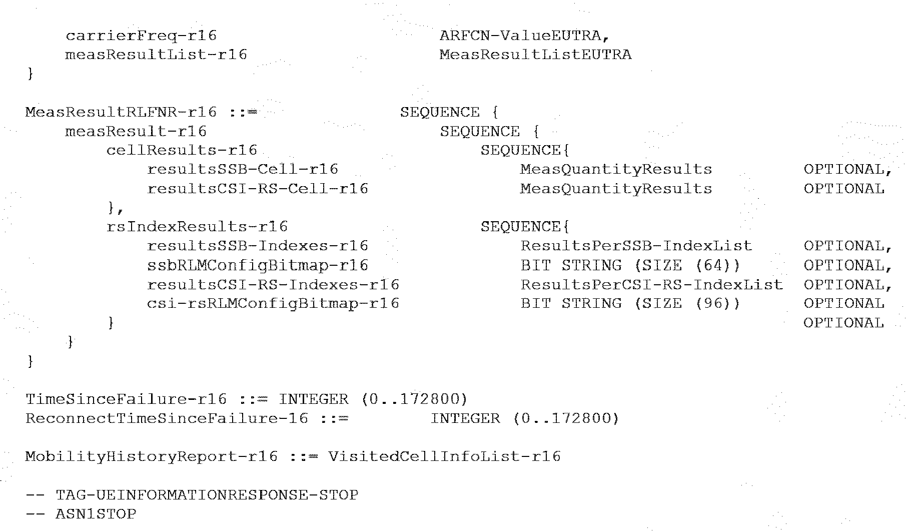

| *RLF-Report* field descriptions |
|---|
| *connectionFailureType* |
| This field is used to indicate whether the connection failure is due to radio link failure or handover failure. |
| *csi-rsRLMConfigBitmap* |
| This field is used to indicate the CSI-RS indexes that are also part of the RLM configurations. |
| *c-RNTI* |
| This field indicates the C-RNTI used in the PCell upon detecting radio link failure or the C-RNTI used in the source PCell upon handover failure. |
| *failedCellId* |
| This field is used to indicate the cell in which connection establishment failed. |
| *failedPCellId* |
| This field is used to indicate the PCell in which RLF is detected or the target PCell of the failed handover. The UE sets the ARFCN according to the frequency band used for transmission/ reception when the failure occurred. |
| *failedPCellId-EUTRA* |
| This field is used to indicate the PCell in which RLF is detected or the target PCell of the failed handover in an E-UTRA RLF report. |
| *measResultLastServCell* |
| This field refers to the last measurement results taken in the PCell, where radio link failure or handover failure happened. |
| *measResultListEUTRA* |
| This field refers to the last measurement results taken in the neighboring EUTRA Cells, when the radio link failure or handover failure happened. |
| *measResultListNR* |
| This field refers to the last measurement results taken in the neighboring NR Cells, when the radio link failure or handover failure happened. UE does not include the *resultsSSB-Indexes* IE, if the *measResultListNR* IE is included in the *LogMeasInfo-r16* IE. |
| *measResultServCell* |
| This field refers to the log measurement results taken in the Serving cell. |
| *measResult-RLF Report-EUTRA* |
| Includes the E-UTRA *RLF-Report-r9* IE as specified in TS 36.331. |
| *noSuitableCellFound* |
| This field is set by the UE when the T311 expires. |
| *previousPCellld* |
| This field is used to indicate the source PCell of the last handover (source PCell when the last *RRCReconfiguration* message including *reconfigurationWithSync* was received). |
| *reestablishmentCellld* |
| This field is used to indicate the cell in which the re-establishment attempt was made after connection failure. |
| *reconnectCellld* |
| This field is used to indicate the cell in which the re-connection was made after connection failure. |
| *reconnectTimeSinceFailure* |
| This field is used to indicate the time that elapsed since the connection failure until reconnection. Value in seconds. The maximum value 172800 means 172800s or longer. |
| *rlf-Cause* |
| This field is used to indicate the cause of the last radio link failure that was detected. In case of handover failure information reporting (i.e., the *connectionFailureType* is set to *'hof'*), the UE is allowed to set this field to any value. |
| *ssbRLMConfigBitmap* |
| This field is used to indicate the SS/PBCH block indexes that are also part of the RLM configurations. |

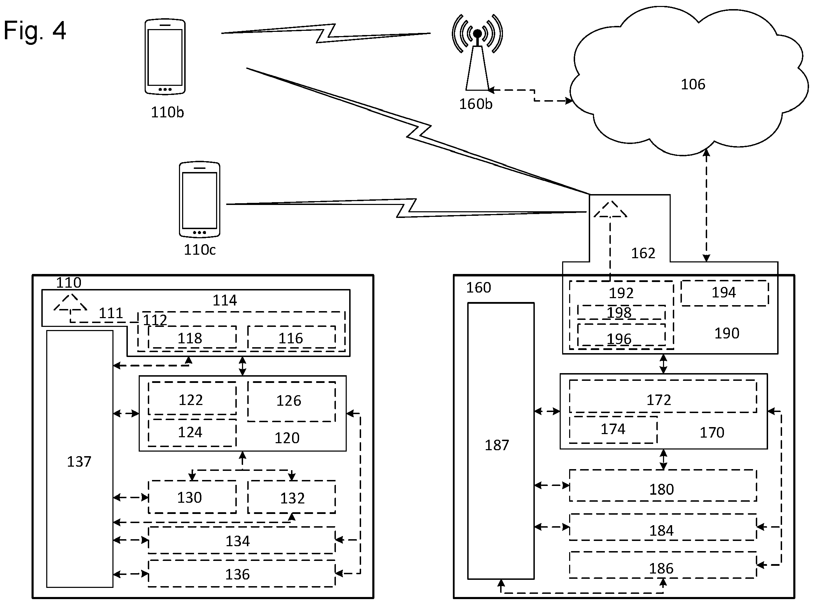

FIGURE 4 illustrates an example wireless network, according to certain embodiments. The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 106 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 160 and WD 110 comprise various components described in more detail below. These components work together to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network.

Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations.

A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs.

As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In FIGURE 4, network node 160 includes processing circuitry 170, device readable medium 180, interface 190, auxiliary equipment 184, power source 186, power circuitry 187, and antenna 162. Although network node 160 illustrated in the example wireless network of FIGURE 4 may represent a device that includes the illustrated combination of hardware components, other embodiments may comprise network nodes with different combinations of components.

It is to be understood that a network node comprises any suitable combination of hardware and/or software needed to perform the tasks, features, functions and methods disclosed herein. Moreover, while the components of network node 160 are depicted as single boxes located within a larger box, or nested within multiple boxes, in practice, a network node may comprise multiple different physical components that make up a single illustrated component (e.g., device readable medium 180 may comprise multiple separate hard drives as well as multiple RAM modules).

Similarly, network node 160 may be composed of multiple physically separate components (e.g., a NodeB component and a RNC component, or a BTS component and a BSC component, etc.), which may each have their own respective components. In certain scenarios in which network node 160 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node.

In some embodiments, network node 160 may be configured to support multiple radio access technologies (RATs). In such embodiments, some components may be duplicated (e.g., separate device readable medium 180 for the different RATs) and some components may be reused (e.g., the same antenna 162 may be shared by the RATs). Network node 160 may also include multiple sets of the various illustrated components for different wireless technologies integrated into network node 160, such as, for example, GSM, WCDMA, LTE, NR, WiFi, or Bluetooth wireless technologies. These wireless technologies may be integrated into the same or different chip or set of chips and other components within network node 160.

Processing circuitry 170 is configured to perform any determining, calculating, or similar operations (e.g., certain obtaining operations) described herein as being provided by a network node. These operations performed by processing circuitry 170 may include processing information obtained by processing circuitry 170 by, for example, converting the obtained information into other information, comparing the obtained information or converted information to information stored in the network node, and/or performing one or more operations based on the obtained information or converted information, and as a result of said processing making a determination.

Processing circuitry 170 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 160 components, such as device readable medium 180, network node 160 functionality.

For example, processing circuitry 170 may execute instructions stored in device readable medium 180 or in memory within processing circuitry 170. Such functionality may include providing any of the various wireless features, functions, or benefits discussed herein. In some embodiments, processing circuitry 170 may include a system on a chip (SOC).

In some embodiments, processing circuitry 170 may include one or more of radio frequency (RF) transceiver circuitry 172 and baseband processing circuitry 174. In some embodiments, radio frequency (RF) transceiver circuitry 172 and baseband processing circuitry 174 may be on separate chips (or sets of chips), boards, or units, such as radio units and digital units. In alternative embodiments, part or all of RF transceiver circuitry 172 and baseband processing circuitry 174 may be on the same chip or set of chips, boards, or units

In certain embodiments, some or all of the functionality described herein as being provided by a network node, base station, eNB or other such network device may be performed by processing circuitry 170 executing instructions stored on device readable medium 180 or memory within processing circuitry 170. In alternative embodiments, some or all of the functionality may be provided by processing circuitry 170 without executing instructions stored on a separate or discrete device readable medium, such as in a hard-wired manner. In any of those embodiments, whether executing instructions stored on a device readable storage medium or not, processing circuitry 170 can be configured to perform the described functionality. The benefits provided by such functionality are not limited to processing circuitry 170 alone or to other components of network node 160 but are enjoyed by network node 160 as a whole, and/or by end users and the wireless network generally.

Device readable medium 180 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 170. Device readable medium 180 may store any suitable instructions, data or information, including a computer program, software, an application including one or more of logic, rules, code, tables, etc. and/or other instructions capable of being executed by processing circuitry 170 and, utilized by network node 160. Device readable medium 180 may be used to store any calculations made by processing circuitry 170 and/or any data received via interface 190. In some embodiments, processing circuitry 170 and device readable medium 180 may be considered to be integrated.

Interface 190 is used in the wired or wireless communication of signaling and/or data between network node 160, network 106, and/or WDs 110. As illustrated, interface 190 comprises port(s)/terminal(s) 194 to send and receive data, for example to and from network 106 over a wired connection. Interface 190 also includes radio front end circuitry 192 that may be coupled to, or in certain embodiments a part of, antenna 162.

Radio front end circuitry 192 comprises filters 198 and amplifiers 196. Radio front end circuitry 192 may be connected to antenna 162 and processing circuitry 170. Radio front end circuitry may be configured to condition signals communicated between antenna 162 and processing circuitry 170. Radio front end circuitry 192 may receive digital data that is to be sent out to other network nodes or WDs via a wireless connection. Radio front end circuitry 192 may convert the digital data into a radio signal having the appropriate channel and bandwidth parameters using a combination of filters 198 and/or amplifiers 196. The radio signal may then be transmitted via antenna 162. Similarly, when receiving data, antenna 162 may collect radio signals which are then converted into digital data by radio front end circuitry 192. The digital data may be passed to processing circuitry 170. In other embodiments, the interface may comprise different components and/or different combinations of components.

In certain alternative embodiments, network node 160 may not include separate radio front end circuitry 192, instead, processing circuitry 170 may comprise radio front end circuitry and may be connected to antenna 162 without separate radio front end circuitry 192. Similarly, in some embodiments, all or some of RF transceiver circuitry 172 may be considered a part of interface 190. In still other embodiments, interface 190 may include one or more ports or terminals 194, radio front end circuitry 192, and RF transceiver circuitry 172, as part of a radio unit (not shown), and interface 190 may communicate with baseband processing circuitry 174, which is part of a digital unit (not shown).

Antenna 162 may include one or more antennas, or antenna arrays, configured to send and/or receive wireless signals. Antenna 162 may be coupled to radio front end circuitry 192 and may be any type of antenna capable of transmitting and receiving data and/or signals wirelessly. In some embodiments, antenna 162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 162 may be separate from network node 160 and may be connectable to network node 160 through an interface or port.

Antenna 162, interface 190, and/or processing circuitry 170 may be configured to perform any receiving operations and/or certain obtaining operations described herein as being performed by a network node. Any information, data and/or signals may be received from a wireless device, another network node and/or any other network equipment. Similarly, antenna 162, interface 190, and/or processing circuitry 170 may be configured to perform any transmitting operations described herein as being performed by a network node. Any information, data and/or signals may be transmitted to a wireless device, another network node and/or any other network equipment.

Power circuitry 187 may comprise, or be coupled to, power management circuitry and is configured to supply the components of network node 160 with power for performing the functionality described herein. Power circuitry 187 may receive power from power source 186. Power source 186 and/or power circuitry 187 may be configured to provide power to the various components of network node 160 in a form suitable for the respective components (e.g., at a voltage and current level needed for each respective component). Power source 186 may either be included in, or external to, power circuitry 187 and/or network node 160.

For example, network node 160 may be connectable to an external power source (e.g., an electricity outlet) via an input circuitry or interface such as an electrical cable, whereby the external power source supplies power to power circuitry 187. As a further example, power source 186 may comprise a source of power in the form of a battery or battery pack which is connected to, or integrated in, power circuitry 187. The battery may provide backup power should the external power source fail. Other types of power sources, such as photovoltaic devices, may also be used.

Alternative embodiments of network node 160 may include additional components beyond those shown in FIGURE 4 that may be responsible for providing certain aspects of the network node's functionality, including any of the functionality described herein and/or any functionality necessary to support the subject matter described herein. For example, network node 160 may include user interface equipment to allow input of information into network node 160 and to allow output of information from network node 160. This may allow a user to perform diagnostic, maintenance, repair, and other administrative functions for network node 160.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air.

In some embodiments, a WD may be configured to transmit and/or receive information without direct human interaction. For instance, a WD may be designed to transmit information to a network on a predetermined schedule, when triggered by an internal or external event, or in response to requests from the network.

Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device.

As yet another specific example, in an Internet of Things (IoT) scenario, a WD may represent a machine or other device that performs monitoring and/or measurements and transmits the results of such monitoring and/or measurements to another WD and/or a network node. The WD may in this case be a machine-to-machine (M2M) device, which may in a 3GPP context be referred to as an MTC device. As one example, the WD may be a UE implementing the 3GPP narrow band internet of things (NB-IoT) standard. Examples of such machines or devices are sensors, metering devices such as power meters, industrial machinery, or home or personal appliances (e.g. refrigerators, televisions, etc.) personal wearables (e.g., watches, fitness trackers, etc.).

In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 110 includes antenna 111, interface 114, processing circuitry 120, device readable medium 130, user interface equipment 132, auxiliary equipment 134, power source 136 and power circuitry 137. WD 110 may include multiple sets of one or more of the illustrated components for different wireless technologies supported by WD 110, such as, for example, GSM, WCDMA, LTE, NR, WiFi, WiMAX, or Bluetooth wireless technologies, just to mention a few. These wireless technologies may be integrated into the same or different chips or set of chips as other components within WD 110.

Antenna 111 may include one or more antennas or antenna arrays, configured to send and/or receive wireless signals, and is connected to interface 114. In certain alternative embodiments, antenna 111 may be separate from WD 110 and be connectable to WD 110 through an interface or port. Antenna 111, interface 114, and/or processing circuitry 120 may be configured to perform any receiving or transmitting operations described herein as being performed by a WD. Any information, data and/or signals may be received from a network node and/or another WD. In some embodiments, radio front end circuitry and/or antenna 111 may be considered an interface.

As illustrated, interface 114 comprises radio front end circuitry 112 and antenna 111. Radio front end circuitry 112 comprise one or more filters 118 and amplifiers 116. Radio front end circuitry 112 is connected to antenna 111 and processing circuitry 120 and is configured to condition signals communicated between antenna 111 and processing circuitry 120. Radio front end circuitry 112 may be coupled to or a part of antenna 111. In some embodiments, WD 110 may not include separate radio front end circuitry 112; rather, processing circuitry 120 may comprise radio front end circuitry and may be connected to antenna 111. Similarly, in some embodiments, some or all of RF transceiver circuitry 122 may be considered a part of interface 114.

Radio front end circuitry 112 may receive digital data that is to be sent out to other network nodes or WDs via a wireless connection. Radio front end circuitry 112 may convert the digital data into a radio signal having the appropriate channel and bandwidth parameters using a combination of filters 118 and/or amplifiers 116. The radio signal may then be transmitted via antenna 111. Similarly, when receiving data, antenna 111 may collect radio signals which are then converted into digital data by radio front end circuitry 112. The digital data may be passed to processing circuitry 120. In other embodiments, the interface may comprise different components and/or different combinations of components.

Processing circuitry 120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 110 components, such as device readable medium 130, WD 110 functionality. Such functionality may include providing any of the various wireless features or benefits discussed herein. For example, processing circuitry 120 may execute instructions stored in device readable medium 130 or in memory within processing circuitry 120 to provide the functionality disclosed herein.

As illustrated, processing circuitry 120 includes one or more of RF transceiver circuitry 122, baseband processing circuitry 124, and application processing circuitry 126. In other embodiments, the processing circuitry may comprise different components and/or different combinations of components. In certain embodiments processing circuitry 120 of WD 110 may comprise a SOC. In some embodiments, RF transceiver circuitry 122, baseband processing circuitry 124, and application processing circuitry 126 may be on separate chips or sets of chips.

In alternative embodiments, part or all of baseband processing circuitry 124 and application processing circuitry 126 may be combined into one chip or set of chips, and RF transceiver circuitry 122 may be on a separate chip or set of chips. In still alternative embodiments, part or all of RF transceiver circuitry 122 and baseband processing circuitry 124 may be on the same chip or set of chips, and application processing circuitry 126 may be on a separate chip or set of chips. In yet other alternative embodiments, part or all of RF transceiver circuitry 122, baseband processing circuitry 124, and application processing circuitry 126 may be combined in the same chip or set of chips. In some embodiments, RF transceiver circuitry 122 may be a part of interface 114. RF transceiver circuitry 122 may condition RF signals for processing circuitry 120.

In certain embodiments, some or all of the functionality described herein as being performed by a WD may be provided by processing circuitry 120 executing instructions stored on device readable medium 130, which in certain embodiments may be a computer-readable storage medium. In alternative embodiments, some or all of the functionality may be provided by processing circuitry 120 without executing instructions stored on a separate or discrete device readable storage medium, such as in a hard-wired manner.

In any of those embodiments, whether executing instructions stored on a device readable storage medium or not, processing circuitry 120 can be configured to perform the described functionality. The benefits provided by such functionality are not limited to processing circuitry 120 alone or to other components of WD 110, but are enjoyed by WD 110, and/or by end users and the wireless network generally.

Processing circuitry 120 may be configured to perform any determining, calculating, or similar operations (e.g., certain obtaining operations) described herein as being performed by a WD. These operations, as performed by processing circuitry 120, may include processing information obtained by processing circuitry 120 by, for example, converting the obtained information into other information, comparing the obtained information or converted information to information stored by WD 110, and/or performing one or more operations based on the obtained information or converted information, and as a result of said processing making a determination.

Device readable medium 130 may be operable to store a computer program, software, an application including one or more of logic, rules, code, tables, etc. and/or other instructions capable of being executed by processing circuitry 120. Device readable medium 130 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 120. In some embodiments, processing circuitry 120 and device readable medium 130 may be integrated.

User interface equipment 132 may provide components that allow for a human user to interact with WD 110. Such interaction may be of many forms, such as visual, audial, tactile, etc. User interface equipment 132 may be operable to produce output to the user and to allow the user to provide input to WD 110. The type of interaction may vary depending on the type of user interface equipment 132 installed in WD 110. For example, if WD 110 is a smart phone, the interaction may be via a touch screen; if WD 110 is a smart meter, the interaction may be through a screen that provides usage (e.g., the number of gallons used) or a speaker that provides an audible alert (e.g., if smoke is detected).

User interface equipment 132 may include input interfaces, devices and circuits, and output interfaces, devices and circuits. User interface equipment 132 is configured to allow input of information into WD 110 and is connected to processing circuitry 120 to allow processing circuitry 120 to process the input information. User interface equipment 132 may include, for example, a microphone, a proximity or other sensor, keys/buttons, a touch display, one or more cameras, a USB port, or other input circuitry. User interface equipment 132 is also configured to allow output of information from WD 110, and to allow processing circuitry 120 to output information from WD 110. User interface equipment 132 may include, for example, a speaker, a display, vibrating circuitry, a USB port, a headphone interface, or other output circuitry. Using one or more input and output interfaces, devices, and circuits, of user interface equipment 132, WD 110 may communicate with end users and/or the wireless network and allow them to benefit from the functionality described herein.

Auxiliary equipment 134 is operable to provide more specific functionality which may not be generally performed by WDs. This may comprise specialized sensors for doing measurements for various purposes, interfaces for additional types of communication such as wired communications etc. The inclusion and type of components of auxiliary equipment 134 may vary depending on the embodiment and/or scenario.

Power source 136 may, in some embodiments, be in the form of a battery or battery pack. Other types of power sources, such as an external power source (e.g., an electricity outlet), photovoltaic devices or power cells, may also be used. WD 110 may further comprise power circuitry 137 for delivering power from power source 136 to the various parts of WD 110 which need power from power source 136 to carry out any functionality described or indicated herein. Power circuitry 137 may in certain embodiments comprise power management circuitry.

Power circuitry 137 may additionally or alternatively be operable to receive power from an external power source; in which case WD 110 may be connectable to the external power source (such as an electricity outlet) via input circuitry or an interface such as an electrical power cable. Power circuitry 137 may also in certain embodiments be operable to deliver power from an external power source to power source 136. This may be, for example, for the charging of power source 136. Power circuitry 137 may perform any formatting, converting, or other modification to the power from power source 136 to make the power suitable for the respective components of WD 110 to which power is supplied.

Although the subject matter described herein may be implemented in any appropriate type of system using any suitable components, the embodiments disclosed herein are described in relation to a wireless network, such as the example wireless network illustrated in FIGURE 4. For simplicity, the wireless network of FIGURE 4 only depicts network 106, network nodes 160 and 160b, and WDs 110, 110b, and 110c. In practice, a wireless network may further include any additional elements suitable to support communication between wireless devices or between a wireless device and another communication device, such as a landline telephone, a service provider, or any other network node or end device. Of the illustrated components, network node 160 and wireless device (WD) 110 are depicted with additional detail. The wireless network may provide communication and other types of services to one or more wireless devices to facilitate the wireless devices' access to and/or use of the services provided by, or via, the wireless network.

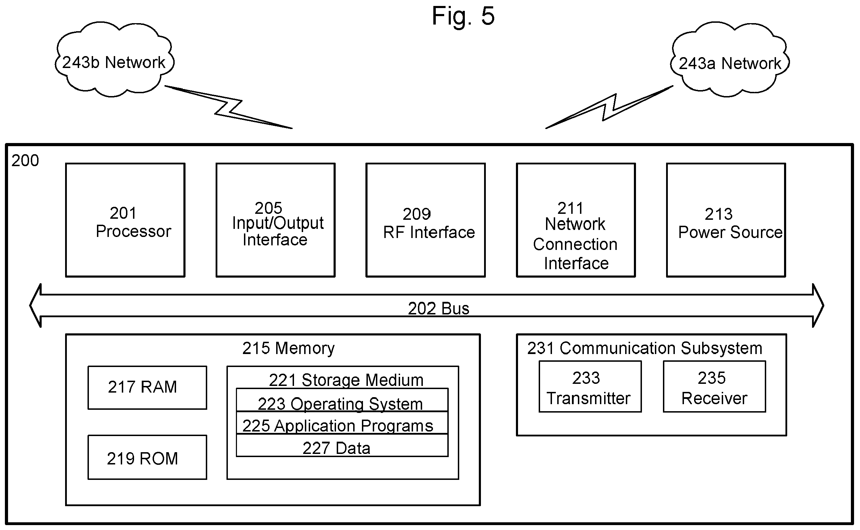

FIGURE 5 illustrates an example user equipment, according to certain embodiments. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 200 may be any UE identified by the 3^{rd} Generation Partnership Project (3GPP), including a NB-IoT UE, a machine type communication (MTC) UE, and/or an enhanced MTC (eMTC) UE. UE 200, as illustrated in FIGURE 5, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE may be used interchangeable. Accordingly, although FIGURE 5 is a UE, the components discussed herein are equally applicable to a WD, and vice-versa.

In FIGURE 5, UE 200 includes processing circuitry 201 that is operatively coupled to input/output interface 205, radio frequency (RF) interface 209, network connection interface 211, memory 215 including random access memory (RAM) 217, read-only memory (ROM) 219, and storage medium 221 or the like, communication subsystem 231, power source 213, and/or any other component, or any combination thereof. Storage medium 221 includes operating system 223, application program 225, and data 227. In other embodiments, storage medium 221 may include other similar types of information. Certain UEs may use all the components shown in FIGURE 5, or only a subset of the components. The level of integration between the components may vary from one UE to another UE. Further, certain UEs may contain multiple instances of a component, such as multiple processors, memories, transceivers, transmitters, receivers, etc.

In FIGURE 5, processing circuitry 201 may be configured to process computer instructions and data. Processing circuitry 201 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 201 may include two central processing units (CPUs). Data may be information in a form suitable for use by a computer.

In the depicted embodiment, input/output interface 205 may be configured to provide a communication interface to an input device, output device, or input and output device. UE 200 may be configured to use an output device via input/output interface 205.

An output device may use the same type of interface port as an input device. For example, a USB port may be used to provide input to and output from UE 200. The output device may be a speaker, a sound card, a video card, a display, a monitor, a printer, an actuator, an emitter, a smartcard, another output device, or any combination thereof.

UE 200 may be configured to use an input device via input/output interface 205 to allow a user to capture information into UE 200. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In FIGURE 5, RF interface 209 may be configured to provide a communication interface to RF components such as a transmitter, a receiver, and an antenna. Network connection interface 211 may be configured to provide a communication interface to network 243a. Network 243a may encompass wired and/or wireless networks such as a local-area network (LAN), a wide-area network (WAN), a computer network, a wireless network, a telecommunications network, another like network or any combination thereof. For example, network 243a may comprise a Wi-Fi network. Network connection interface 211 may be configured to include a receiver and a transmitter interface used to communicate with one or more other devices over a communication network according to one or more communication protocols, such as Ethernet, TCP/IP, SONET, ATM, or the like. Network connection interface 211 may implement receiver and transmitter functionality appropriate to the communication network links (e.g., optical, electrical, and the like). The transmitter and receiver functions may share circuit components, software or firmware, or alternatively may be implemented separately.

RAM 217 may be configured to interface via bus 202 to processing circuitry 201 to provide storage or caching of data or computer instructions during the execution of software programs such as the operating system, application programs, and device drivers. ROM 219 may be configured to provide computer instructions or data to processing circuitry 201. For example, ROM 219 may be configured to store invariant low-level system code or data for basic system functions such as basic input and output (I/O), startup, or reception of keystrokes from a keyboard that are stored in a non-volatile memory.

Storage medium 221 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 221 may be configured to include operating system 223, application program 225 such as a web browser application, a widget or gadget engine or another application, and data file 227. Storage medium 221 may store, for use by UE 200, any of a variety of various operating systems or combinations of operating systems.

Storage medium 221 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 221 may allow UE 200 to access computer-executable instructions, application programs or the like, stored on transitory or non-transitory memory media, to off-load data, or to upload data. An article of manufacture, such as one utilizing a communication system may be tangibly embodied in storage medium 221, which may comprise a device readable medium.

In FIGURE 5, processing circuitry 201 may be configured to communicate with network 243b using communication subsystem 231. Network 243a and network 243b may be the same network or networks or different network or networks. Communication subsystem 231 may be configured to include one or more transceivers used to communicate with network 243b. For example, communication subsystem 231 may be configured to include one or more transceivers used to communicate with one or more remote transceivers of another device capable of wireless communication such as another WD, UE, or base station of a radio access network (RAN) according to one or more communication protocols, such as IEEE 802.2, CDMA, WCDMA, GSM, LTE, UTRAN, WiMax, or the like. Each transceiver may include transmitter 233 and/or receiver 235 to implement transmitter or receiver functionality, respectively, appropriate to the RAN links (e.g., frequency allocations and the like). Further, transmitter 233 and receiver 235 of each transceiver may share circuit components, software or firmware, or alternatively may be implemented separately.

In the illustrated embodiment, the communication functions of communication subsystem 231 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 231 may include cellular communication, Wi-Fi communication, Bluetooth communication, and GPS communication. Network 243b may encompass wired and/or wireless networks such as a local-area network (LAN), a wide-area network (WAN), a computer network, a wireless network, a telecommunications network, another like network or any combination thereof. For example, network 243b may be a cellular network, a Wi-Fi network, and/or a near-field network. Power source 213 may be configured to provide alternating current (AC) or direct current (DC) power to components of UE 200.

The features, benefits and/or functions described herein may be implemented in one of the components of UE 200 or partitioned across multiple components of UE 200. Further, the features, benefits, and/or functions described herein may be implemented in any combination of hardware, software or firmware. In one example, communication subsystem 231 may be configured to include any of the components described herein. Further, processing circuitry 201 may be configured to communicate with any of such components over bus 202. In another example, any of such components may be represented by program instructions stored in memory that when executed by processing circuitry 201 perform the corresponding functions described herein. In another example, the functionality of any of such components may be partitioned between processing circuitry 201 and communication subsystem 231. In another example, the non-computationally intensive functions of any of such components may be implemented in software or firmware and the computationally intensive functions may be implemented in hardware.

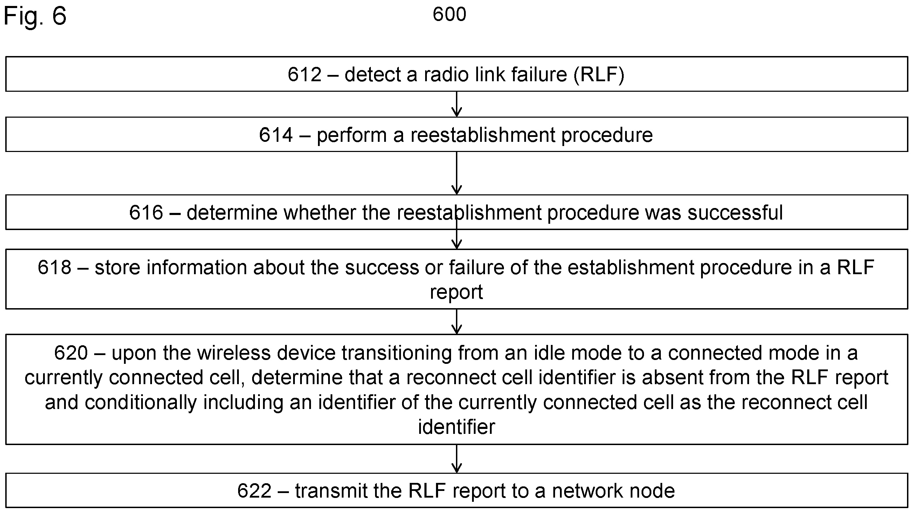

FIGURE 6 is a flowchart illustrating an example method in a wireless device, according to certain embodiments. In particular embodiments, one or more steps of FIGURE 6 may be performed by wireless device 110 described with respect to FIGURE 4.

The method may begin at step 612, where the wireless device (e.g., wireless device 110) detects a RLF. The wireless device may detect RLF according to any of the examples described above.

In response to detecting the RLF, the wireless device performs a reestablishment procedure at step 614. After performing the reestablishment procedure, the wireless device determines whether the reestablishment procedure was successful at step 616. The wireless device may determine the success for failure of the reestablishment procedure according to any of the examples described above.

At step 616, the wireless stores information about the success or failure of the establishment procedure in a RLF report. The information that is stored may depend on one of options 1 or 2 described above. For example, corresponding to option 1, the wireless device may, upon determining the reestablishment procedure was unsuccessful, store the reestablishment cell identifier in the RLF report. The method may further comprise storing one or more of the following in the RLF report: an indication that the reestablishment procedure failed; an indication that no suitable cell was found; and an indication that the wireless device received a reestablishment reject message.

As another example, corresponding to option 2, the wireless device may store the reestablishment cell identifier in the RLF report upon determining the reestablishment procedure was successful.

In some embodiments, the UE always logs the reestablishment cell ID no matter whether the reestablishment was successful or unsuccessful.

At step 620, upon the wireless device transitioning from an idle mode to a connected mode in a currently connected cell, the wireless device may determine that a reconnect cell identifier is absent from the RLF report. The wireless device may then conditionally include an identifier of the currently connected cell as the reconnect cell identifier. The conditional includes may correspond to options 1 or 2 described above.

For example, with respect to option 1, the wireless device includes an identifier of the currently connected cell as the reconnect cell identifier when determining the RLF report includes a reestablishment cell identifier. As another example, with respect to option 2, the wireless device includes an identifier of the currently connected cell as the reconnect cell identifier when the RLF report includes a reestablishment cell identifier.

In some embodiments, the wireless device may also conditionally store one or more of the following in the RLF report: a global cell identifier of the reconnect cell; a physical cell identifier of the reconnect cell; radio frequency information for the reconnect cell; a tracking area code of the reconnect cell; and a public land mobile network identifier of the reconnect cell.

At step 622, the wireless device transmits the RLF report to a network node. The network node may use the RLF report to determine whether the reestablishment procedure was successful.

Modifications, additions, or omissions may be made to method 600 of FIGURE 6. Additionally, one or more steps in the method of FIGURE 6 may be performed in parallel or in any suitable order.

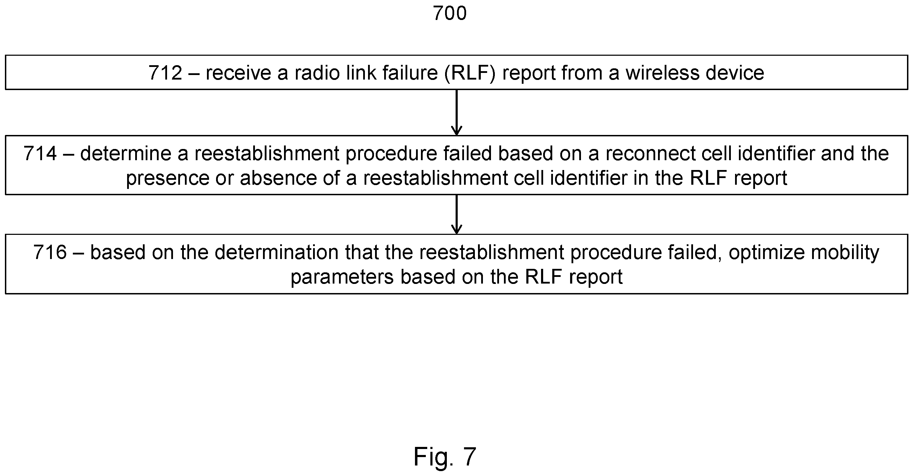

FIGURE 7 is a flowchart illustrating an example method in a network node, according to certain embodiments. In particular embodiments, one or more steps of FIGURE 7 may be performed by network node 160 described with respect to FIGURE 4.

The method may begin at step 712, where a first network node (e.g., network node 160) receives a RLF report from a wireless device (e.g. wireless device 110). The RLF report may include the information described with respect to FIGURE 6 and/or any of the embodiments and examples described above.

At step 714, the network node determined a reestablishment procedure failed based on a reconnect cell identifier and the presence or absence of a reestablishment cell identifier in the RLF report, according to any of the embodiments and examples described herein.

Based on the determination that the reestablishment procedure failed, at step 716 the network node optimizes mobility parameters based on the RLF report. In particular embodiments, optimizing mobility parameters comprises optimizing parameters at the first network node and/or transmitting an indication of the reestablishment failure to a second network node. The second network node may be a source network node or a target network node. The optimizations may include the optimizations described with respect to any of the embodiments and examples described herein.

Modifications, additions, or omissions may be made to method 700 of FIGURE 7. Additionally, one or more steps in the method of FIGURE 7 may be performed in parallel or in any suitable order.

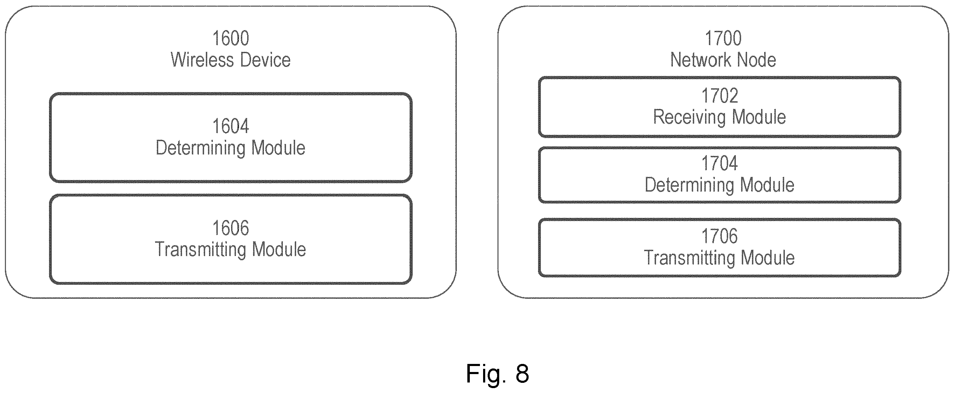

FIGURE 8 illustrates a schematic block diagram of two apparatuses in a wireless network (for example, the wireless network illustrated in FIGURE 4). The apparatuses include a wireless device and a network node (e.g., wireless device 110 and network node 160 illustrated in FIGURE 4). Apparatuses 1600 and 1700 are operable to carry out the example methods described with reference to FIGURES 6 and 7, respectively, and possibly any other processes or methods disclosed herein. It is also to be understood that the methods of FIGURES 6 and 7 are not necessarily carried out solely by apparatuses 1600 and/or 1700. At least some operations of the methods can be performed by one or more other entities.

Virtual apparatuses 1600 and 1700 may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments.

In some implementations, the processing circuitry may be used to cause determining module 1604, transmitting module 1606, and any other suitable units of apparatus 1600 to perform corresponding functions according one or more embodiments of the present disclosure. Similarly, the processing circuitry described above may be used to cause receiving module 1702, determining module 1704, transmitting module 1706, and any other suitable units of apparatus 1700 to perform corresponding functions according one or more embodiments of the present disclosure.

As illustrated in FIGURE 8, apparatus 1600 includes determining module 1604 is configured to determine RLF and reestablishment success according to any of the embodiments and examples described herein. Transmitting module 1606 is configured to transmit a report (e.g., RLF report) to a network node, according to any of the embodiments and examples described herein.

As illustrated in FIGURE 8, apparatus 1700 includes receiving module 1702 configured to receive a report (e.g., RLF report) according to any of the embodiments and examples described herein. Determining module 1704 is configured to determine a failure of a reestablishment procedure according to any of the embodiments and examples described herein. Transmitting module 1706 is configured to transmit an indication of the failure to another network node, according to any of the embodiments and examples described herein.

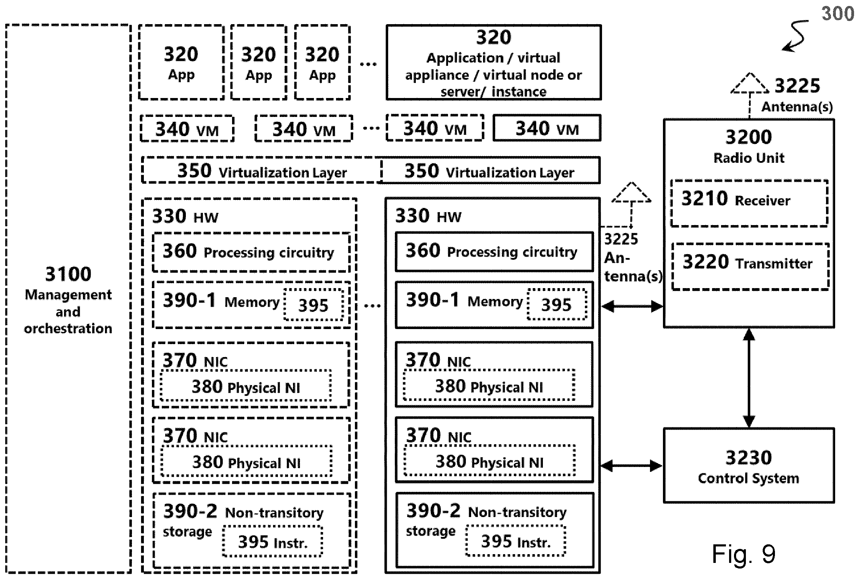

FIGURE 9 is a schematic block diagram illustrating a virtualization environment 300 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 300 hosted by one or more of hardware nodes 330. Further, in embodiments in which the virtual node is not a radio access node or does not require radio connectivity (e.g., a core network node), then the network node may be entirely virtualized.

The functions may be implemented by one or more applications 320 (which may alternatively be called software instances, virtual appliances, network functions, virtual nodes, virtual network functions, etc.) operative to implement some of the features, functions, and/or benefits of some of the embodiments disclosed herein. Applications 320 are run in virtualization environment 300 which provides hardware 330 comprising processing circuitry 360 and memory 390. Memory 390 contains instructions 395 executable by processing circuitry 360 whereby application 320 is operative to provide one or more of the features, benefits, and/or functions disclosed herein.

Virtualization environment 300, comprises general-purpose or special-purpose network hardware devices 330 comprising a set of one or more processors or processing circuitry 360, which may be commercial off-the-shelf (COTS) processors, dedicated Application Specific Integrated Circuits (ASICs), or any other type of processing circuitry including digital or analog hardware components or special purpose processors. Each hardware device may comprise memory 390-1 which may be non-persistent memory for temporarily storing instructions 395 or software executed by processing circuitry 360. Each hardware device may comprise one or more network interface controllers (NICs) 370, also known as network interface cards, which include physical network interface 380. Each hardware device may also include non-transitory, persistent, machine-readable storage media 390-2 having stored therein software 395 and/or instructions executable by processing circuitry 360. Software 395 may include any type of software including software for instantiating one or more virtualization layers 350 (also referred to as hypervisors), software to execute virtual machines 340 as well as software allowing it to execute functions, features and/or benefits described in relation with some embodiments described herein.

Virtual machines 340, comprise virtual processing, virtual memory, virtual networking or interface and virtual storage, and may be run by a corresponding virtualization layer 350 or hypervisor. Different embodiments of the instance of virtual appliance 320 may be implemented on one or more of virtual machines 340, and the implementations may be made in different ways.

During operation, processing circuitry 360 executes software 395 to instantiate the hypervisor or virtualization layer 350, which may sometimes be referred to as a virtual machine monitor (VMM). Virtualization layer 350 may present a virtual operating platform that appears like networking hardware to virtual machine 340.

As shown in FIGURE 9, hardware 330 may be a standalone network node with generic or specific components. Hardware 330 may comprise antenna 3225 and may implement some functions via virtualization. Alternatively, hardware 330 may be part of a larger cluster of hardware (e.g. such as in a data center or customer premise equipment (CPE)) where many hardware nodes work together and are managed via management and orchestration (MANO) 3100, which, among others, oversees lifecycle management of applications 320.

Virtualization of the hardware is in some contexts referred to as network function virtualization (NFV). NFV may be used to consolidate many network equipment types onto industry standard high-volume server hardware, physical switches, and physical storage, which can be located in data centers, and customer premise equipment.

In the context of NFV, virtual machine 340 may be a software implementation of a physical machine that runs programs as if they were executing on a physical, non-virtualized machine. Each of virtual machines 340, and that part of hardware 330 that executes that virtual machine, be it hardware dedicated to that virtual machine and/or hardware shared by that virtual machine with others of the virtual machines 340, forms a separate virtual network elements (VNE).

Still in the context of NFV, Virtual Network Function (VNF) is responsible for handling specific network functions that run in one or more virtual machines 340 on top of hardware networking infrastructure 330 and corresponds to application 320 in Figure 18.

In some embodiments, one or more radio units 3200 that each include one or more transmitters 3220 and one or more receivers 3210 may be coupled to one or more antennas 3225. Radio units 3200 may communicate directly with hardware nodes 330 via one or more appropriate network interfaces and may be used in combination with the virtual components to provide a virtual node with radio capabilities, such as a radio access node or a base station.

In some embodiments, some signaling can be effected with the use of control system 3230 which may alternatively be used for communication between the hardware nodes 330 and radio units 3200.

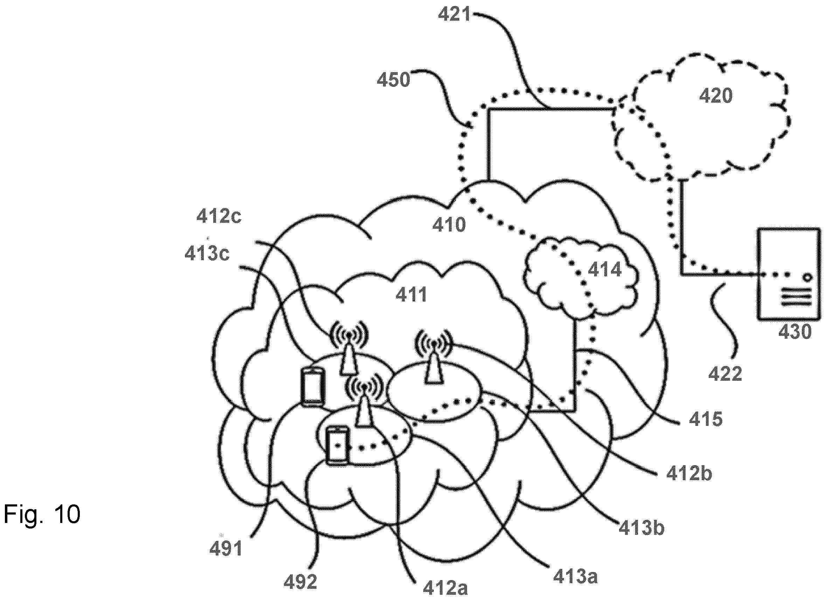

With reference to FIGURE 10, in accordance with an embodiment, a communication system includes telecommunication network 410, such as a 3GPP-type cellular network, which comprises access network 411, such as a radio access network, and core network 414. Access network 411 comprises a plurality of base stations 412a, 412b, 412c, such as NBs, eNBs, gNBs or other types of wireless access points, each defining a corresponding coverage area 413a, 413b, 413c. Each base station 412a, 412b, 412c is connectable to core network 414 over a wired or wireless connection 415. A first UE 491 located in coverage area 413c is configured to wirelessly connect to, or be paged by, the corresponding base station 412c. A second UE 492 in coverage area 413a is wirelessly connectable to the corresponding base station 412a. While a plurality of UEs 491, 492 are illustrated in this example, the disclosed embodiments are equally applicable to a situation where a sole UE is in the coverage area or where a sole UE is connecting to the corresponding base station 412.

Telecommunication network 410 is itself connected to host computer 430, which may be embodied in the hardware and/or software of a standalone server, a cloud-implemented server, a distributed server or as processing resources in a server farm. Host computer 430 may be under the ownership or control of a service provider or may be operated by the service provider or on behalf of the service provider. Connections 421 and 422 between telecommunication network 410 and host computer 430 may extend directly from core network 414 to host computer 430 or may go via an optional intermediate network 420. Intermediate network 420 may be one of, or a combination of more than one of, a public, private or hosted network; intermediate network 420, if any, may be a backbone network or the Internet; in particular, intermediate network 420 may comprise two or more sub-networks (not shown).

The communication system of FIGURE 10 as a whole enables connectivity between the connected UEs 491, 492 and host computer 430. The connectivity may be described as an over-the-top (OTT) connection 450. Host computer 430 and the connected UEs 491, 492 are configured to communicate data and/or signaling via OTT connection 450, using access network 411, core network 414, any intermediate network 420 and possible further infrastructure (not shown) as intermediaries. OTT connection 450 may be transparent in the sense that the participating communication devices through which OTT connection 450 passes are unaware of routing of uplink and downlink communications. For example, base station 412 may not or need not be informed about the past routing of an incoming downlink communication with data originating from host computer 430 to be forwarded (e.g., handed over) to a connected UE 491. Similarly, base station 412 need not be aware of the future routing of an outgoing uplink communication originating from the UE 491 towards the host computer 430.

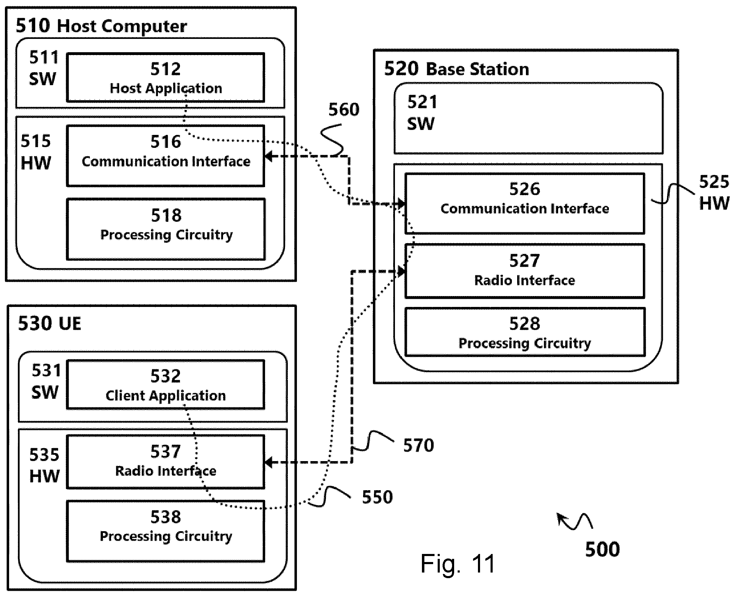

FIGURE 11 illustrates an example host computer communicating via a base station with a user equipment over a partially wireless connection, according to certain embodiments. Example implementations, in accordance with an embodiment of the UE, base station and host computer discussed in the preceding paragraphs will now be described with reference to FIGURE 11. In communication system 500, host computer 510 comprises hardware 515 including communication interface 516 configured to set up and maintain a wired or wireless connection with an interface of a different communication device of communication system 500. Host computer 510 further comprises processing circuitry 518, which may have storage and/or processing capabilities. In particular, processing circuitry 518 may comprise one or more programmable processors, application-specific integrated circuits, field programmable gate arrays or combinations of these (not shown) adapted to execute instructions. Host computer 510 further comprises software 511, which is stored in or accessible by host computer 510 and executable by processing circuitry 518. Software 511 includes host application 512. Host application 512 may be operable to provide a service to a remote user, such as UE 530 connecting via OTT connection 550 terminating at UE 530 and host computer 510. In providing the service to the remote user, host application 512 may provide user data which is transmitted using OTT connection 550.

Communication system 500 further includes base station 520 provided in a telecommunication system and comprising hardware 525 enabling it to communicate with host computer 510 and with UE 530. Hardware 525 may include communication interface 526 for setting up and maintaining a wired or wireless connection with an interface of a different communication device of communication system 500, as well as radio interface 527 for setting up and maintaining at least wireless connection 570 with UE 530 located in a coverage area (not shown in FIGURE 11) served by base station 520. Communication interface 526 may be configured to facilitate connection 560 to host computer 510. Connection 560 may be direct, or it may pass through a core network (not shown in FIGURE 11) of the telecommunication system and/or through one or more intermediate networks outside the telecommunication system. In the embodiment shown, hardware 525 of base station 520 further includes processing circuitry 528, which may comprise one or more programmable processors, application-specific integrated circuits, field programmable gate arrays or combinations of these (not shown) adapted to execute instructions. Base station 520 further has software 521 stored internally or accessible via an external connection.

Communication system 500 further includes UE 530 already referred to. Its hardware 535 may include radio interface 537 configured to set up and maintain wireless connection 570 with a base station serving a coverage area in which UE 530 is currently located. Hardware 535 of UE 530 further includes processing circuitry 538, which may comprise one or more programmable processors, application-specific integrated circuits, field programmable gate arrays or combinations of these (not shown) adapted to execute instructions. UE 530 further comprises software 531, which is stored in or accessible by UE 530 and executable by processing circuitry 538. Software 531 includes client application 532. Client application 532 may be operable to provide a service to a human or non-human user via UE 530, with the support of host computer 510. In host computer 510, an executing host application 512 may communicate with the executing client application 532 via OTT connection 550 terminating at UE 530 and host computer 510. In providing the service to the user, client application 532 may receive request data from host application 512 and provide user data in response to the request data. OTT connection 550 may transfer both the request data and the user data. Client application 532 may interact with the user to generate the user data that it provides.

It is noted that host computer 510, base station 520 and UE 530 illustrated in FIGURE 11 may be similar or identical to host computer 430, one of base stations 412a, 412b, 412c and one of UEs 491, 492 of FIGURE 9, respectively. This is to say, the inner workings of these entities may be as shown in FIGURE 11 and independently, the surrounding network topology may be that of FIGURE 9.

In FIGURE 11, OTT connection 550 has been drawn abstractly to illustrate the communication between host computer 510 and UE 530 via base station 520, without explicit reference to any intermediary devices and the precise routing of messages via these devices. Network infrastructure may determine the routing, which it may be configured to hide from UE 530 or from the service provider operating host computer 510, or both. While OTT connection 550 is active, the network infrastructure may further take decisions by which it dynamically changes the routing (e.g., based on load balancing consideration or reconfiguration of the network).

Wireless connection 570 between UE 530 and base station 520 is in accordance with the teachings of the embodiments described throughout this disclosure. One or more of the various embodiments improve the performance of OTT services provided to UE 530 using OTT connection 550, in which wireless connection 570 forms the last segment. More precisely, the teachings of these embodiments may improve the signaling overhead and reduce latency, which may provide faster internet access for users.

A measurement procedure may be provided for monitoring data rate, latency and other factors on which the one or more embodiments improve. There may further be an optional network functionality for reconfiguring OTT connection 550 between host computer 510 and UE 530, in response to variations in the measurement results. The measurement procedure and/or the network functionality for reconfiguring OTT connection 550 may be implemented in software 511 and hardware 515 of host computer 510 or in software 531 and hardware 535 of UE 530, or both. In embodiments, sensors (not shown) may be deployed in or in association with communication devices through which OTT connection 550 passes; the sensors may participate in the measurement procedure by supplying values of the monitored quantities exemplified above or supplying values of other physical quantities from which software 511, 531 may compute or estimate the monitored quantities. The reconfiguring of OTT connection 550 may include message format, retransmission settings, preferred routing etc.; the reconfiguring need not affect base station 520, and it may be unknown or imperceptible to base station 520. Such procedures and functionalities may be known and practiced in the art. In certain embodiments, measurements may involve proprietary UE signaling facilitating host computer 510's measurements of throughput, propagation times, latency and the like. The measurements may be implemented in that software 511 and 531 causes messages to be transmitted, in particular empty or 'dummy' messages, using OTT connection 550 while it monitors propagation times, errors etc.

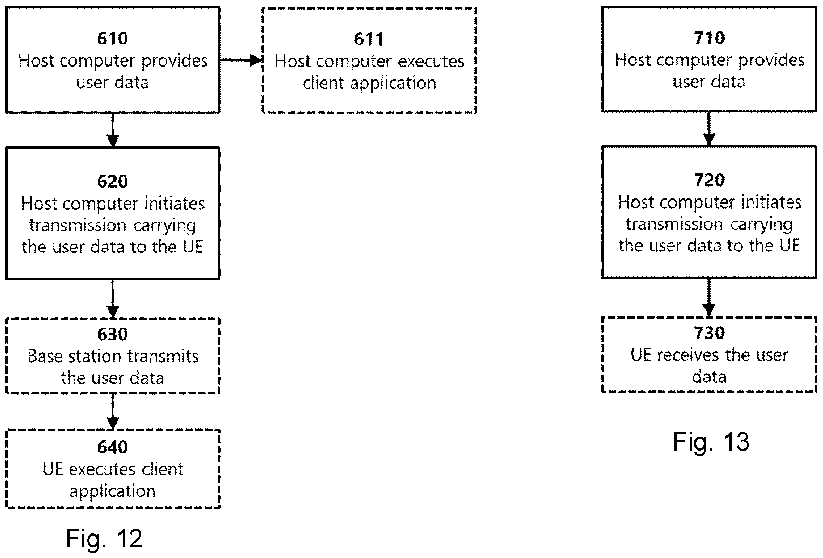

FIGURE 12 is a flowchart illustrating a method implemented in a communication system, in accordance with one embodiment. The communication system includes a host computer, a base station and a UE which may be those described with reference to FIGURES 10 and 11. For simplicity of the present disclosure, only drawing references to FIGURE 12 will be included in this section.

In step 610, the host computer provides user data. In substep 611 (which may be optional) of step 610, the host computer provides the user data by executing a host application. In step 620, the host computer initiates a transmission carrying the user data to the UE. In step 630 (which may be optional), the base station transmits to the UE the user data which was carried in the transmission that the host computer initiated, in accordance with the teachings of the embodiments described throughout this disclosure. In step 640 (which may also be optional), the UE executes a client application associated with the host application executed by the host computer.

FIGURE 13 is a flowchart illustrating a method implemented in a communication system, in accordance with one embodiment. The communication system includes a host computer, a base station and a UE which may be those described with reference to FIGURES 10 and 11. For simplicity of the present disclosure, only drawing references to FIGURE 13 will be included in this section.

In step 710 of the method, the host computer provides user data. In an optional substep (not shown) the host computer provides the user data by executing a host application. In step 720, the host computer initiates a transmission carrying the user data to the UE. The transmission may pass via the base station, in accordance with the teachings of the embodiments described throughout this disclosure. In step 730 (which may be optional), the UE receives the user data carried in the transmission.

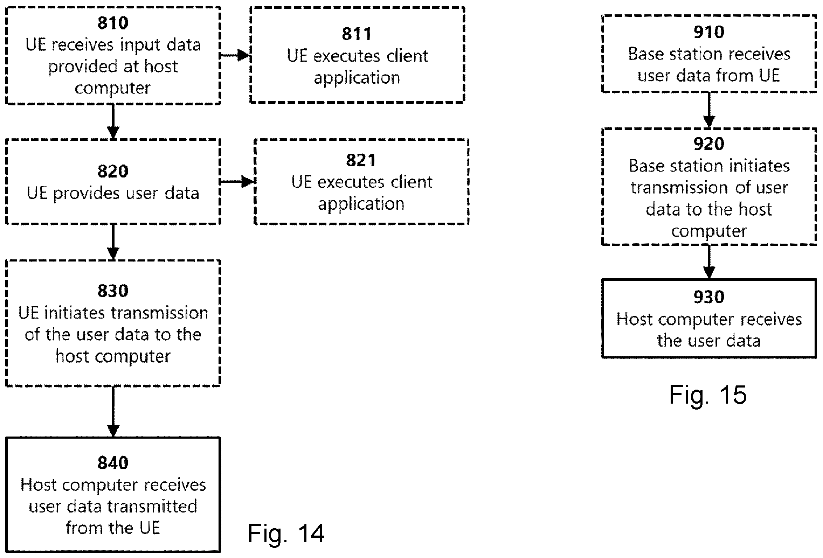

FIGURE 14 is a flowchart illustrating a method implemented in a communication system, in accordance with one embodiment. The communication system includes a host computer, a base station and a UE which may be those described with reference to FIGURES 10 and 11. For simplicity of the present disclosure, only drawing references to FIGURE 14 will be included in this section.

In step 810 (which may be optional), the UE receives input data provided by the host computer. Additionally, or alternatively, in step 820, the UE provides user data. In substep 821 (which may be optional) of step 820, the UE provides the user data by executing a client application. In substep 811 (which may be optional) of step 810, the UE executes a client application which provides the user data in reaction to the received input data provided by the host computer. In providing the user data, the executed client application may further consider user input received from the user. Regardless of the specific manner in which the user data was provided, the UE initiates, in substep 830 (which may be optional), transmission of the user data to the host computer. In step 840 of the method, the host computer receives the user data transmitted from the UE, in accordance with the teachings of the embodiments described throughout this disclosure.

FIGURE 15 is a flowchart illustrating a method implemented in a communication system, in accordance with one embodiment. The communication system includes a host computer, a base station and a UE which may be those described with reference to FIGURES 10 and 11. For simplicity of the present disclosure, only drawing references to FIGURE 15 will be included in this section.

In step 910 (which may be optional), in accordance with the teachings of the embodiments described throughout this disclosure, the base station receives user data from the UE. In step 920 (which may be optional), the base station initiates transmission of the received user data to the host computer. In step 930 (which may be optional), the host computer receives the user data carried in the transmission initiated by the base station.

Some example embodiments are described below.
1. A computer program product comprising a non-transitory computer readable medium storing computer readable program code, the computer readable program code operable, when executed by processing circuitry to:
   detect a radio link failure (RLF);
   perform a reestablishment procedure;
   determine whether the reestablishment procedure was successful;
   store information about the success or failure of the establishment procedure in a RLF report;
   upon the wireless device transitioning from an idle mode to a connected mode in a currently connected cell, determine that a reconnect cell identifier is absent from the RLF report and conditionally include an identifier of the currently connected cell as the reconnect cell identifier; and
   transmit the RLF report to a network node.
2. The computer program product of embodiment 1, wherein the program code is operable to store information about the success or failure of the establishment procedure in a RLF report by, upon determining the reestablishment procedure was unsuccessful, storing the reestablishment cell identifier in the RLF report.
3. The computer program product of embodiment 2, wherein the program code is further operable to store one or more of the following in the RLF report:
   an indication that the reestablishment procedure failed;
   an indication that no suitable cell was found; and
   an indication that the wireless device received a reestablishment reject message.
4. The computer program product of any one of embodiments 1-3, wherein the program code is operable to conditionally include an identifier of the currently connected cell as the reconnect cell identifier by determining the RLF report includes a reestablishment cell identifier.
5. The computer program product of embodiment 1, wherein the program code is operable to store information about the success or failure of the establishment procedure in a RLF report by storing the reestablishment cell identifier in the RLF report upon determining the reestablishment procedure was successful.
6. The computer program product of embodiment 5, wherein the program code is operable to conditionally include an identifier of the currently connected cell as the reconnect cell identifier by determining the RLF report does not include a reestablishment cell identifier.
7. The computer program product of any one of embodiments 1-6, wherein the program code is operable to conditionally include an identifier of the currently connected cell as the reconnect cell identifier further by storing one or more of the following in the RLF report:
   a global cell identifier of the reconnect cell;
   a physical cell identifier of the reconnect cell;
   radio frequency information for the reconnect cell;
   a tracking area code of the reconnect cell; and
   a public land mobile network identifier of the reconnect cell.
8. A computer program product comprising a non-transitory computer readable medium storing computer readable program code, the computer readable program code operable, when executed by processing circuitry to:
   receive a radio link failure (RLF) report from a wireless device;
   determine a reestablishment procedure failed based on a reconnect cell identifier and the presence or absence of a reestablishment cell identifier in the RLF report; and
   based on the determination that the reestablishment procedure failed, optimize mobility parameters based on the RLF report.
9. The computer program product of embodiment 8, wherein the program code is operable to optimize mobility parameters by optimizing parameters at the first network node.
10. The computer program product of embodiment 8, wherein the program code is operable to optimize mobility parameters by transmitting an indication of the reestablishment failure to a second network node.
11. The computer program product of embodiment 10, wherein the second network node is a source network node.
12. The computer program product of embodiment 10, wherein the second network node is a target network node.
13. A wireless device comprising a determining module and a transmitting module:
   the determining module operable to:
      detect a radio link failure (RLF);
      perform a reestablishment procedure;
      determine whether the reestablishment procedure was successful;
      store information about the success or failure of the establishment procedure in a RLF report;
      upon the wireless device transitioning from an idle mode to a connected mode in a currently connected cell, determine that a reconnect cell identifier is absent from the RLF report and conditionally include an identifier of the currently connected cell as the reconnect cell identifier; and
   the transmitting module is operable to transmit the RLF report to a network node.
13. A network node comprising a receiving module, a determining module, and an optimizing module:
   the receiving module operable to receive a radio link failure (RLF) report from a wireless device;
   the determining module operable to determine a reestablishment procedure failed based on a reconnect cell identifier and the presence or absence of a reestablishment cell identifier in the RLF report; and
   the optimizing module operable to, based on the determination that the reestablishment procedure failed, optimize mobility parameters based on the RLF report.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Modifications, additions, or omissions may be made to the systems and apparatuses disclosed herein without departing from the scope of the invention. The components of the systems and apparatuses may be integrated or separated. Moreover, the operations of the systems and apparatuses may be performed by more, fewer, or other components. Additionally, operations of the systems and apparatuses may be performed using any suitable logic comprising software, hardware, and/or other logic. As used in this document, "each" refers to each member of a set or each member of a subset of a set.

Modifications, additions, or omissions may be made to the methods disclosed herein without departing from the scope of the invention. The methods may include more, fewer, or other steps. Additionally, steps may be performed in any suitable order.

The foregoing description sets forth numerous specific details. It is understood, however, that embodiments may be practiced without these specific details. In other instances, well-known circuits, structures and techniques have not been shown in detail in order not to obscure the understanding of this description. Those of ordinary skill in the art, with the included descriptions, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments, whether or not explicitly described.

Although this disclosure has been described in terms of certain embodiments, alterations and permutations of the embodiments will be apparent to those skilled in the art. Accordingly, the above description of the embodiments does not constrain this disclosure. Other changes, substitutions, and alterations are possible without departing from the scope of this disclosure, as defined by the claims below.

At least some of the following abbreviations may be used in this disclosure. If there is an inconsistency between abbreviations, preference should be given to how it is used above. If listed multiple times below, the first listing should be preferred over any subsequent listing(s).
- 1x RTT: CDMA2000 1x Radio Transmission Technology
- 3GPP: 3rd Generation Partnership Project
- 5G: 5th Generation
- ACK/NACK: Acknowledgment/Non-acknowledgment
- BCCH: Broadcast Control Channel
- BCH: Broadcast Channel
- CA: Carrier Aggregation
- CBRA: Contention-Based Random Access
- CC: Carrier Component
- CDMA: Code Division Multiplexing Access
- CFRA: Contention-Free Random Access
- CG: Configured Grant
- CGI: Cell Global Identifier
- CP: Cyclic Prefix
- CQI: Channel Quality information
- C-RNTI: Cell RNTI
- CSI: Channel State Information
- DCCH: Dedicated Control Channel
- DCI: Downlink Control Information
- DFTS-OFDM: Discrete Fourier Transform Spread OFDM
- DL: Downlink
- DM: Demodulation
- DMRS: Demodulation Reference Signal
- DRX: Discontinuous Reception
- DTX: Discontinuous Transmission
- DTCH: Dedicated Traffic Channel
- E-CID: Enhanced Cell-ID (positioning method)
- E-SMLC: Evolved-Serving Mobile Location Centre
- ECGI: Evolved CGI
- eNB: E-UTRAN NodeB
- ePDCCH: enhanced Physical Downlink Control Channel
- E-SMLC: evolved Serving Mobile Location Center
- E-UTRA: Evolved UTRA
- E-UTRAN: Evolved UTRAN
- FDD: Frequency Division Duplex
- GERAN: GSM EDGE Radio Access Network
- gNB: Base station in NR
- GNSS: Global Navigation Satellite System
- GSM: Global System for Mobile communication
- HO: Handover
- HSPA: High Speed Packet Access
- HRPD: High Rate Packet Data
- IAB: Integrated Access and Backhaul
- LOS: Line of Sight
- LTE: Long-Term Evolution
- MAC: Medium Access Control
- MCS: Modulation and Coding Scheme
- MDT: Minimization of Drive Tests
- MIB: Master Information Block
- MME: Mobility Management Entity
- MSC: Mobile Switching Center
- NPDCCH: Narrowband Physical Downlink Control Channel
- NR: New Radio
- OFDM: Orthogonal Frequency Division Multiplexing
- OFDMA: Orthogonal Frequency Division Multiple Access
- OSS: Operations Support System
- OTDOA: Observed Time Difference of Arrival
- O&M: Operation and Maintenance
- PBCH: Physical Broadcast Channel
- P-CCPCH: Primary Common Control Physical Channel
- PCell: Primary Cell
- PDCCH: Physical Downlink Control Channel
- PDSCH: Physical Downlink Shared Channel
- PGW: Packet Gateway
- PLMN: Public Land Mobile Network
- PMI: Precoder Matrix Indicator
- PRACH: Physical Random Access Channel
- PRS: Positioning Reference Signal
- PSS: Primary Synchronization Signal
- PUCCH: Physical Uplink Control Channel
- PUR: Preconfigured Uplink Resources
- PUSCH: Physical Uplink Shared Channel
- RACH: Random Access Channel
- QAM: Quadrature Amplitude Modulation
- RA: Random Access
- RAN: Radio Access Network
- RAT: Radio Access Technology
- RLF: Radio Link Failure
- RLM: Radio Link Management
- RNC: Radio Network Controller
- RNTI: Radio Network Temporary Identifier
- RRC: Radio Resource Control
- RRM: Radio Resource Management
- RS: Reference Signal
- RSCP: Received Signal Code Power
- RSRP: Reference Symbol Received Power OR Reference Signal Received Power
- RSRQ: Reference Signal Received Quality OR Reference Symbol Received Quality
- RSSI: Received Signal Strength Indicator
- RSTD: Reference Signal Time Difference
- SCH: Synchronization Channel
- SCell: Secondary Cell
- SDU: Service Data Unit
- SFN: System Frame Number
- SGW: Serving Gateway
- SI: System Information
- SIB: System Information Block
- SNR: Signal to Noise Ratio
- SON: Self Optimized Network
- SPS: Semi-Persistent Scheduling
- SUL: Supplemental Uplink
- SS: Synchronization Signal
- SSB: Synchronization Signal Block
- SSS: Secondary Synchronization Signal
- TA: Timing Advance
- TDD: Time Division Duplex
- TDOA: Time Difference of Arrival
- TO: Transmission Occasion
- TOA: Time of Arrival
- TSS: Tertiary Synchronization Signal
- TTI: Transmission Time Interval
- UE: User Equipment
- UL: Uplink
- URLLC: Ultra-Reliable and Low-Latency Communications
- UMTS: Universal Mobile Telecommunication System
- USIM: Universal Subscriber Identity Module
- UTDOA: Uplink Time Difference of Arrival
- UTRA: Universal Terrestrial Radio Access
- UTRAN: Universal Terrestrial Radio Access Network
- WCDMA: Wide CDMA
- WLAN: Wide Local Area Network

## Claims

1. A computer program product for a wireless device (110), the computer program product comprising a non-transitory computer readable medium storing computer readable program code, the computer readable program code operable, when executed by processing circuitry to:
detect a radio link failure (RLF);
perform a reestablishment procedure;
determine whether the reestablishment procedure was successful;
store information about the success or failure of the establishment procedure in a RLF report;
upon the wireless device transitioning from an idle mode to a connected mode in a currently connected cell, determine that a reconnect cell identifier is absent from the RLF report and conditionally include an identifier of the currently connected cell as the reconnect cell identifier; and
transmit the RLF report to a network node (160).

2. The computer program product of claim 1, wherein the program code is operable to store information about the success or failure of the establishment procedure in a RLF report by, upon determining the reestablishment procedure was unsuccessful, storing the reestablishment cell identifier in the RLF report.

3. The computer program product of claim 2, wherein the program code is further operable to store one or more of the following in the RLF report:
an indication that the reestablishment procedure failed;
an indication that no suitable cell was found; and
an indication that the wireless device received a reestablishment reject message.

4. The computer program product of any one of claims 1-3, wherein the program code is operable to conditionally include an identifier of the currently connected cell as the reconnect cell identifier by determining the RLF report includes a reestablishment cell identifier.

5. The computer program product of claim 1, wherein the program code is operable to store information about the success or failure of the establishment procedure in a RLF report by storing the reestablishment cell identifier in the RLF report upon determining the reestablishment procedure was successful.

6. The computer program product of claim 5, wherein the program code is operable to conditionally include an identifier of the currently connected cell as the reconnect cell identifier by determining the RLF report does not include a reestablishment cell identifier.

7. The computer program product of any one of claims 1-6, wherein the program code is operable to conditionally include an identifier of the currently connected cell as the reconnect cell identifier further by storing one or more of the following in the RLF report:
a global cell identifier of the reconnect cell;
a physical cell identifier of the reconnect cell;
radio frequency information for the reconnect cell;
a tracking area code of the reconnect cell; and
a public land mobile network identifier of the reconnect cell.

8. A computer program product for a network node (160), the computer program product comprising a non-transitory computer readable medium storing computer readable program code, the computer readable program code operable, when executed by processing circuitry to:
receive a radio link failure (RLF) report from a wireless device (110);
determine a reestablishment procedure failed based on a reconnect cell identifier and the presence or absence of a reestablishment cell identifier in the RLF report; and
based on the determination that the reestablishment procedure failed, optimize mobility parameters based on the RLF report.

9. The computer program product of claim 8, wherein the program code is operable to optimize mobility parameters by optimizing parameters at the first network node.

10. The computer program product of claim 8, wherein the program code is operable to optimize mobility parameters by transmitting an indication of the reestablishment failure to a second network node.

11. The computer program product of claim 10, wherein the second network node is a source network node.

12. The computer program product of claim 10, wherein the second network node is a target network node.
